# EUROPÄISCHE PATENTSCHRIFT

(11) **EP 3 489 916 B1**
(45) Veröffentlichungstag und Bekanntmachung des Hinweises auf die Patenterteilung: **09.10.2024**
(21) Anmeldenummer: 18208415.2
(22) Anmeldetag: 26.11.2018
(51) Int. Cl.: H04W 12/08, G06F 21/35, G07C 9/00

(54) **ZUGANGSKONTROLLVORRICHTUNG, ZUGANGSKONTROLLSYSTEM UND VERFAHREN**
ACCESS CONTROL DEVICE, ACCESS CONTROL SYSTEM AND METHOD
DISPOSITIF DE CONTRÔLE D'ACCÈS, SYSTÈME DE CONTRÔLE D'ACCÈS ET PROCÉDÉ

(30) Priorität: 27.11.2017 EP 17203912
(43) Veröffentlichungstag der Anmeldung: 29.05.2019
(73) Patentinhaber: dormakaba Schweiz AG, 8623 Wetzikon (CH); DORMA Deutschland GmbH, 58256 Ennepetal (DE)
(72) Erfinder: Wolf, Martin, D 53179 Bonn (DE); Fanarji, Alexander, D 53179 Bonn (DE); Schmidt, Andreas, D 53179 Bonn (DE); Raiano, Adriano, CH 8153 Rümlang (CH); Meier, Tom, CH 8620 Wetzikon (CH); Bormuth, Phillip, 79114 D Freiburg (DE); Graf, Fabien, CH 8057 Zürich (CH)
(74) Vertreter: Balder IP Law, S.L.

(56) Entgegenhaltungen:
- WO-A1-2016/185008
- DE-A1- 102016 104 530
- US-A1- 2005 204 167
- US-A1- 2014 298 023
- US-A1- 2017 098 335
- US-A1- 2017 180 539

## Beschreibung

Die Erfindung betrifft eine Zugangskontrollvorrichtung für ein Zugangskontrollsystem gemäß dem Oberbegriff des Patentanspruchs 1. Die Zugangskontrollvorrichtung ist zur Zuordnung zu einem physischen Bereich ausgebildet. Mittels der Zugangskontrollvorrichtung ist Zugang zu dem physischen Bereich gewährbar. Die Zugangskontrollvorrichtung umfasst eine Programmierschnittstelle. Des Weiteren betrifft die Erfindung ein Zugangskontrollsystem mit einer erfindungsgemäßen Zugangskontrollvorrichtung gemäß dem Anspruch 10 und ein Verfahren zur Übermittlung von Daten von einer mobilen Vorrichtung an eine Zugangskontrollvorrichtung gemäß dem unabhängigen Patentanspruch 13

US 2002/0204167 A1 offenbart eine Zugangskontrollvorrichtung mit einem biometrischen Fingerprintsensor. Die Zugangskontrollvorrichtung umfasst eine Programmierschnittstelle, um von einem Token kabelgebunden Kontrolldaten zum Vergleich mit Daten, die von dem Fingerprintsensor erfasst werden, übermittelt zu bekommen. Die Kabelverbindung des Tokens zu der Zugangskontrollvorrichtung ist für den Benutzer aufwändig herzustellen.

Die WO2016/185008 A1 offenbart eine Zugangskontrollvorrichtung, die mittels einer mobilen Vorrichtung ein Software- oder Firmware-Update kabellos erhalten kann. Die DE 10 2016 104 530 A1 offenbart eine Zugangskontrollvorrichtung eines Fahrzeugs, die mittels einer mobilen Vorrichtung umprogrammiert werden kann. Die US 2017/0098335 A1 offenbart eine Zugangskontrollvorrichtung nach dem Oberbegriff des Anspruchs 1, wobei eine mobile Vorrichtung über eine Programmierschnittstelle verfügt.

Es ist daher die Aufgabe der Erfindung, eine Zugangskontrollvorrichtung, ein Zugangskontrollsystem und ein Verfahren zur Übermittlung von Daten von einer mobilen Vorrichtung an eine Zugangskontrollvorrichtung zur Verfügung zu stellen, die den vorherigen Nachteil überwinden, insbesondere die benutzerfreundlich ausgebildet ist.

Die Aufgabe wird gelöst durch eine Zugangskontrollvorrichtung gemäß dem unabhängigen Anspruch 1. Vorteilhafte Weiterbildungen der Zugangskontrollvorrichtung sind in den abhängigen Ansprüchen, der Beschreibung und in den Figuren angegeben. Ferner wird die Aufgabe auch durch ein Zugangskontrollsystem gemäß dem Anspruch 10 und durch ein Verfahren gemäß dem unabhängigen Anspruch 13 gelöst. Vorteilhafte Weiterbildungen des Zugangskontrollsystems sind in den abhängigen Ansprüchen 11 und 12 in der Beschreibung und in den Figuren angegeben. Insbesondere umfasst das erfindungsgemäße Zugangskontrollsystem eine erfindungsgemäße Zugangskontrollvorrichtung, so wie die Zugangskontrollvorrichtung in einem der Ansprüche 1 bis 9 der Beschreibung und den Figuren beschrieben ist. Vorteilhafte Weiterbildungen des erfindungsgemäßen Verfahrens sind in der Beschreibung und in den Figuren angegeben. Merkmale und Details, die in Zusammenhang mit der erfindungsgemäßen Zugangskontrollvorrichtung beschrieben sind, gelten dabei auch in Zusammenhang mit dem erfindungsgemäßen Zugangskontrollsystem und dem erfindungsgemäßen Verfahren und umgekehrt. Dabei können die in der Beschreibung und in den Ansprüchen erwähnten Merkmale jeweils einzeln für sich oder in Kombination erfindungswesentlich sein. Insbesondere werden eine Zugangskontrollvorrichtung und ein Zugangskontrollsystem unter Schutz gestellt, auf dem das erfindungsgemäße Verfahren, insbesondere das Verfahren nach Anspruch 13 ausführbar ist, wie auch ein Verfahren, das mit der erfindungsgemäßen Zugangskontrollvorrichtung, insbesondere mit einer Zugangskontrollvorrichtung gemäß einem der Ansprüche 1 bis 9 oder das mit dem erfindungsgemäßen Zugangskontrollsystem, insbesondere mit einem Zugangskontrollsystem nach einem der Ansprüche 10 bis 12 ausgeführt werden kann.

Erfindungsgemäß ist vorgesehen, dass die Programmierschnittstelle dazu dient, mit einer mobilen Vorrichtung drahtlos zu kommunizieren.

Dadurch, dass die mobile Vorrichtung und die Programmierschnittstelle (API) drahtlos miteinander kommunizieren, kann auf die Herstellung einer kabelgebundenen Verbindung verzichtet werden. Hierdurch ist die erfindungsgemäße Zugangskontrollvorrichtung besonders benutzerfreundlich. Die Programmierschnittstelle kann auch als API bezeichnet werden. Unter einer Kommunikation wird insbesondere verstanden, dass die Zugangskontrollvorrichtung Daten mittels der Programmierschnittstelle empfängt.

Die Zugangskontrollvorrichtung ist dem physischen Bereich zugeordnet. Ein Benutzer wird insbesondere die Zugangskontrollvorrichtung dem physischen Bereich zuordnen. Die Zugangskontrollvorrichtung dient als insbesondere festinstallierter Wächter zu dem physischen Bereich. Die Zugangskontrollvorrichtung ist bevorzugt zur Anordnung nahe dem physischen Bereich vorgesehen. Die Zugangskontrollvorrichtung kann eine elektromechanische Vorrichtung, z. B. einen Elektromotor oder ein Solenoid, oder eine elektromagnetische Vorrichtung umfassen, mittels derer der Benutzer Zugang zu dem physischen Bereich erlangen kann. Beispielsweise kann die Zugangskontrollvorrichtung eine Handhabe umfassen, die mittels der elektromechanischen Vorrichtung mit einem Schloss wirkverbindbar ist. Alternativ kann die Zugangskontrollvorrichtung mittels der elektromechanischen Vorrichtung ein Riegelelement, insbesondere einen Riegel und/oder eine Falle, betätigen. In einer weiteren Alternative kann die Zugangskontrollvorrichtung mittels der elektromechanischen oder elektromagnetischen Vorrichtung eine Öffnung der Barriere, insbesondere der Tür, der Schranke oder des Drehkreuzes, zulassen. Die Zugangskontrollvorrichtung kann insbesondere als ein elektromechanischer Beschlag, als ein elektromechanischer Schließzylinder, als ein elektromechanischer Türöffner oder als ein Motorschloss ausgebildet sein. Die Zugangskontrollvorrichtung kann einen Elektromotor zur Bewegung der Barriere, insbesondere der Tür, des Drehkreuzes oder der Schranke, umfassen. Die Zugangskontrollvorrichtung kann mehrteilig ausgebildet sein. So kann die Zugangskontrollvorrichtung einen Leser umfassen. Der Leser kann mit der elektromechanischen oder elektromagnetischen Vorrichtung, insbesondere mit dem elektromechanischen Beschlag, dem elektromechanischer Schließzylinder, dem Elektromotor, dem Elektromagnet oder dem Motorschloss, kabellos oder kabelgebunden kommunizieren.

Die Zugangskontrollvorrichtung umfasst bevorzugt einen Prozessor. Die Zugangskontrollvorrichtung umfasst bevorzugt einen Speicher.

Die Zugangskontrollvorrichtung kann einen Tongeber zur akustischen Anzeige einer Gewährung des Zugangs und/oder eine Lichtquelle zur visuellen Anzeige einer Gewährung und/oder einer Verwehrung des Zugangs umfassen.

Der physische Bereich ist bevorzugt durch eine Barriere versperrt. Die Barriere kann als Tür, insbesondere als Gebäudetür, als Deckel, als Klappe, als Drehkreuz oder als Schranke ausgebildet sein. Die Tür kann z. B. als eine Drehtür, eine Schiebetür oder als eine Karusselltür ausgebildet sein.

Der physische Bereich ist insbesondere feststehend. Der physische Bereich kann als Raum oder als Box ausgebildet sein. Beispielsweise kann es sich bei dem physischen Bereich um eine durch eine Tür versperrter Raum handeln. Alternativ kann der physische Bereich als eine versperrte Box, insbesondere eine Postbox, als ein Schließfach, als ein Außenbereich oder als ein durch eine Schranke behinderter Bereich, z. B. Parkbereich, ausgebildet sein.

Die mobile Vorrichtung und die Zugangskontrollvorrichtung können insbesondere über eine drahtlose Nahbereichskommunikation miteinander kommunizieren. Hierbei wird insbesondere eine Nahbereichskommunikation wie Bluetooth, insbesondere Bluetooth Low Energy (BLE), RFID oder NFC verwendet.

Die Zugangskontrollvorrichtung umfasst insbesondere eine Sende- und Empfangseinheit für die Nahbereichskommunikation. Die Daten, die mittels der Programmierschnittstelle in der Zugangskontrollvorrichtung verarbeitet werden, empfängt die Zugangskontrollvorrichtung drahtlos über eine Empfangseinheit. Die Empfangseinheit umfasst zumindest eine Antenne.

Die mobile Vorrichtung umfasst insbesondere einen Prozessor und/oder einen Speicher. Bevorzugt umfasst die mobile Vorrichtung einen Anschluss an ein mobiles Kommunikationsnetz. Das mobile Kommunikationsnetz kann als Telekommunikationsnetz ausgebildet sein. So ist die mobile Vorrichtung besonders bevorzugt als Mobiltelefon ausgebildet. Bevorzugt ist das Mobiltelefon als ein Smartphone ausgebildet. Die mobile Vorrichtung kann insbesondere ein Display umfassen. Besonders bevorzugt kann der Benutzer über das Display Befehle eingeben.

Die mobile Vorrichtung umfasst insbesondere eine erste Sende- und Empfangsvorrichtung für das Telekommunikationsnetz. Die mobile Vorrichtung umfasst insbesondere zweite eine Sende- und Empfangsvorrichtung für die Nahbereichskommunikation.

Die Zugangskontrollvorrichtung umfasst insbesondere eine weitere Kommunikationsschnittstelle, insbesondere eine Binärschnittstelle. Die Daten, die mittels der Kommunikationsschnittstelle in der Zugangskontrollvorrichtung verarbeitet werden, empfängt die Zugangskontrollvorrichtung drahtlos. Bevorzugt wird hierzu dieselbe Empfangseinheit der Zugangskontrollvorrichtung verwendet. Somit können an die Programmierschnittstelle und an die Kommunikationsschnittstelle mittels derselben Hardware Daten übermittelt werden.

Die Daten für die Kommunikationsschnittstelle und für die Programmierschnittstelle können mit derselben Frequenz an die Empfangseinheit übermittelt werden.

Bevorzugt ist vorgesehen, dass die Zugangskontrollvorrichtung die Programmierschnittstelle infolge einer Kommunikation mit der mobilen Vorrichtung zumindest teilweise öffnet. Die Zugangskontrollvorrichtung kann die Programmierschnittstelle als Folge einer Kommunikation mit der mobilen Vorrichtung zumindest teilweise öffnen.

So kann die Programmierschnittstelle als ein Ausgangszustand verschlossen sein. Über die Programmierschnittstelle kann die Zugangskontrollvorrichtung somit keine Daten verarbeiten. Damit die Zugangskontrollvorrichtung Daten über die Programmierschnittstelle verarbeiten kann, muss die Zugangskontrollvorrichtung die Programmierschnittstelle hierfür zunächst öffnen. D. h. die Zugangskontrollvorrichtung muss zunächst einen Empfang der Daten über die Programmierschnittstelle erlauben.

Ein Verfahren zur zumindest teilweise Öffnung der Programmierschnittstelle beginnt insbesondere damit, dass die Programmierschnittstelle geschlossen ist. Sind die Voraussetzungen zur zumindest teilweisen Öffnung der Programmierschnittstelle erfüllt, so kann das Verfahren zur zumindest teilweise Öffnung der Programmierschnittstelle damit enden, dass die Programmierschnittstelle geöffnet wird oder dass die Programmierschnittstelle nach dem Öffnen erneut geschlossen wird. Ist zumindest eine Voraussetzung zur Öffnung der Programmierschnittstelle nicht erfüllt, so endet das Verfahren damit, dass die Programmierschnittstelle geschlossen bleibt.

Die Kommunikation, die eine zumindest teilweise Öffnung der Programmierschnittstelle zumindest mitverursacht, erfolgt insbesondere über die Kommunikationsschnittstelle.

Es kann sein, dass die Kommunikation, die eine zumindest teilweise Öffnung der Programmierschnittstelle mitverursacht, zur Gewährung eines Zugangs zu dem physischen Bereich erfolgt. Die Kommunikation, die eine zumindest teilweise Öffnung der Programmierschnittstelle zumindest mitverursacht, kann somit innerhalb eines Zugangskontrollverfahrens stattfinden. Das Zugangskontrollverfahren kann die Kommunikation, als dessen Folge die Programmierschnittstelle zumindest teilweise geöffnet wird, umfassen.

Das Zugangskontrollverfahren findet insbesondere statt, um einem Benutzer den Zugang zu dem physischen Bereich zu gewähren. Der physische Bereich ist zu Beginn des Zugangskontrollverfahrens versperrt. Die Überprüfung, ob Zugang gewährt werden darf, ist ein wesentlicher Teil des Zugangskontrollverfahrens. Die mobile Vorrichtung und die Zugangskontrollvorrichtung können dazu ausgebildet sein, das Zugangskontrollverfahren durchzuführen.

Das Zugangskontrollverfahren wird zumindest mittels der Zugangskontrollvorrichtung und der mobilen Vorrichtung durchgeführt, insbesondere wenn sich die mobile Vorrichtung in der Nähe der Zugangskontrollvorrichtung befindet. Das Zugangskontrollverfahren endet insbesondere mit der Gewährung des Zugangs oder mit der Beendigung der Gewährung des Zugangs, wenn die Überprüfung, ob Zugang gewährt werden darf, positiv abgeschlossen wird. Ist eine Zugangsvoraussetzung nicht erfüllt, so kann das Zugangskontrollverfahren vorher enden, wobei ein Zugang verwehrt bleibt.

Die mobile Vorrichtung kann eine Zugangsinformation umfassen. Die Zugangsinformation dient zur Gewährung des Zugangs zu dem physischen Bereich, der von der Zugangskontrollvorrichtung bewacht wird. Die Zugangsinformation kann spezifisch für die Zugangskontrollvorrichtung ausgebildet sein. Die Zugangsinformation kann der Zugangskontrollvorrichtung zugeordnet sein. Die mobile Vorrichtung umfasst bevorzugt zumindest einen Speicher, in dem die Zugangsinformation gespeichert ist.

Die Zugangsinformation kann zumindest ein Zugangsattribut umfassen. Das zumindest eine Zugangsattribut wird bevorzugt in dem Zugangskontrollverfahren verwendet.

Die Zugangsinformation kann einen verschlüsselten Anteil umfassen. Der mobile Anteil kann von der mobilen Vorrichtung unentschlüsselbar sein. Der verschlüsselte Anteil kann das Zugangsattribut umfassen. Die Zugangsinformation, insbesondere der verschlüsselte Anteil, wird insbesondere über die Kommunikationsschnittstelle von der Zugangskontrollvorrichtung empfangen.

Die Zugangsinformation kann einen lesbaren Anteil, der unverschlüsselt ist oder von der mobilen Vorrichtung entschlüsselbar ist, umfassen. Der lesbare Anteil kann eine für den Benutzer auf der mobilen Vorrichtung anzeigbare Information umfassen. Die anzeigbare Information kann insbesondere auf einem Display der mobilen Vorrichtung anzeigbar sein.

Die Zugangsinformation kann als eine Datei ausgebildet sein.

Die Zugangskontrollvorrichtung kann bevorzugt über die Empfangseinheit das zumindest eine Zugangsattribut empfangen. Es können auch mehrere Zugangsattribute der Zugangsinformation von der Zugangskontrollvorrichtung empfangen werden. Wird im Folgenden das Zugangsattribut erwähnt, so können auch mehrere Zugangsattribute gemeint sein. Die Zugangskontrollvorrichtung kann bevorzugt über die Empfangseinheit den verschlüsselten Anteil empfangen.

Die Zugangskontrollvorrichtung kann in dem Zugangskontrollverfahren das zumindest eine übermittelte Zugangsattribut verwenden. Die Kommunikation, die die zumindest teilweise Öffnung der Programmierschnittstelle zumindest mitverursacht, kann die Übermittlung des Zugangsattributs von der mobilen Vorrichtung an die Zugangskontrollvorrichtung umfassen oder der Übermittlung des Zugangsattributs von der mobilen Vorrichtung an die Zugangskontrollvorrichtung entsprechen.

Bevorzugt ist vorgesehen, dass die Zugangskontrollvorrichtung die Programmierschnittstelle in Folge eines positiven Ergebnisses einer Überprüfung zumindest einer Regel zumindest teilweise öffnet. Die Zugangskontrollvorrichtung kann die Programmierschnittstelle als Folge eines positiven Ergebnisses einer Überprüfung zumindest einer Regel zumindest teilweise öffnen.

Die Regel kann somit als eine Voraussetzung zur zumindest teilweise Öffnung der Programmierschnittstelle definiert sein. Eine Überprüfung der Regel bedeutet, dass überprüft wird, ob die in der Regel definierte Voraussetzung erfüllt ist oder nicht.

Die Überprüfung der zumindest einen Regel erfolgt bevorzugt in der Zugangskontrollvorrichtung.

Bei einem negativen Ergebnis der Überprüfung der Regel bleibt die Programmierschnittstelle geschlossen. Das positive Ergebnis der Überprüfung der Regel ist zumindest eine Voraussetzung für die zumindest teilweise Öffnung der Programmierschnittstelle. Wird nur eine Regel zur zumindest teilweisen Öffnung der Programmierschnittstelle überprüft oder entspricht die überprüfte Regel der letzten zu überprüfenden Regel, so wird bei positiven Ergebnis der Überprüfung der Regel die Programmierschnittstelle zumindest teilweise geöffnet. Muss noch zumindest eine weitere Regel zur zumindest teilweise Öffnung der Programmierschnittstelle überprüft werden, so wird die Überprüfung zumindest der zumindest einen weiteren Regel mit dem Ziel, die Programmierschnittstelle zumindest teilweise zu öffnen, vorgenommen. Eine zumindest teilweise Öffnung der Programmierschnittstelle erfolgt nur, wenn ein positives Ergebnis aller hierzu zu überprüfenden Regeln vorliegt.

Die Überprüfung der Regel ist bevorzugt zugleich Teil des Zugangskontrollverfahrens. Die Regel kann somit dazu dienen, den Zugang zu dem physischen Bereich zu gewähren. Somit kann die Regel dazu dienen, den Zugang zu kontrollieren. Die Regel kann eine Zugangsvoraussetzung definieren. Somit kann ein Zugangsberechtigungsprofil zumindest die Regel umfassen. Eine "Überprüfung der Regel" bedeutet, dass überprüft wird, ob die in der Regel definierte Zugangsvoraussetzung erfüllt ist oder nicht.

Bei einem negativen Ergebnis der Überprüfung der Regel wird der Zugang zu dem physischen Bereich verwehrt. Das positive Ergebnis der Überprüfung der Regel ist zumindest eine Voraussetzung zur Gewährung des Zugangs. Wird nur eine Regel zur Gewährung des Zugangs überprüft oder entspricht die überprüfte Regel der letzten für die Gewährung des Zugangs zu überprüfenden Regel, so wird bei positiven Ergebnis der Überprüfung der Regel der Zugang gewährt. Muss noch eine weitere Regel zur Gewährung des Zugangs überprüft werden, so wird bei einem positiven Ergebnis der Überprüfung der Regel die weitere Regel mit dem Ziel der Gewährung des Zugangs überprüft. Eine Gewährung des Zugangs erfolgt nur, wenn ein positives Ergebnis aller hierzu zu überprüfenden Regeln vorliegt.

Somit wird nicht nur durch das Überprüfen der zumindest einen Regel überprüft, ob die Programmierschnittstelle geöffnet werden darf. Vielmehr wird zugleich überprüft, ob eine Voraussetzung für die Gewährung des Zugangs erfüllt ist. Somit wird durch die Verknüpfung des Zugangskontrollverfahrens mit der Prüfung, ob die Programmierschnittstelle zumindest teilweise zu öffnen ist, ein Synergieeffekt erzeugt.

So kann vorgesehen sein, dass die zumindest eine Regel, die eine Voraussetzung zur zumindest teilweisen Öffnung der Programmierschnittstelle definiert, zugleich eine Voraussetzung zur Gewährung des Zugangs definiert.

Hierbei kann es sein, dass darüber hinaus zumindest eine weitere Regel zur zumindest teilweise Öffnung der Programmierschnittstelle zu überprüfen ist und/oder dass darüber hinaus zumindest eine weitere Regel zur Gewährung des Zugangs zu überprüfen ist. Die Regeln, die zur zumindest teilweise Öffnung der Programmierschnittstelle zu überprüfen sind, und die Regeln, die zur Gewährung des Zugangs zu überprüfen sind, überlappen sich somit in zumindest einer Regel. Bevorzugt überlappen sich die Regeln, die zur zumindest teilweise Öffnung der Programmierschnittstelle zu überprüfen sind, und die Regeln, die zur Gewährung des Zugangs zu überprüfen sind, in mehreren Regeln. D. h. es kann sein, dass mehrere Regeln sowohl zur zumindest teilweise Öffnen der Programmierschnittstelle als auch zur Gewährung des Zugangs zu überprüfen sind.

Insbesondere kann sich zumindest eine Regel außerhalb des Überlappungsbereichs befinden. Es kann sein, dass zumindest eine Regel zur Gewährung des Zugangs, jedoch nicht zur zumindest teilweisen Öffnung der Programmierschnittstelle überprüft wird. Es kann sein, dass zumindest eine Regel zur zumindest teilweisen Öffnung der Programmierschnittstelle, jedoch nicht zur Gewährung des Zugangs überprüft wird.

Es ist denkbar, dass die Anzahl der zu überprüfenden Regeln, die Voraussetzung für die Öffnung der Programmierschnittstelle sind, und die Anzahl der überprüfenden Regeln, die Voraussetzung für die Gewährung des Zugangs sind, sich voneinander unterscheiden.

Alternativ können die Regeln, die für die Öffnung der Programmierschnittstelle zu überprüfen sind, den Regeln, die für die Gewährung des Zugangs zu überprüfen sind, einander entsprechen.

Die Überprüfung der zumindest einen Regel für die Öffnung der Programmierschnittstelle und/oder für die Gewährung des Zugangs findet bevorzugt in der Zugangskontrollvorrichtung statt.

Das Zugangsattribut kann als eine Regel, als Daten für eine Regel, als eine Anweisung oder als Daten für eine Anweisung ausgebildet sein. Der verschlüsselte Anteil kann eine Regel, als Daten für eine Regel, als eine Anweisung oder als Daten für eine Anweisung umfassen. Die Daten für eine Regel können insbesondere anstelle der vollständigen Regel als Zugangsattribut vorgesehen sein. Die Zugangskontrollvorrichtung kann mittels der Daten für die Regel die dazugehörige Regel überprüfen. Werden Daten für die Regel als Zugangsattribut übermittelt, so kann die übrige Regel in der Zugangskontrollvorrichtung hinterlegt sein. Hierbei kann die Regel mittels der von der mobilen Vorrichtung übermittelten Daten für die Regel vervollständigt werden. Die Zugangskontrollvorrichtung kann die dazugehörige Regel mittels der übermittelten Daten für die Regel überprüfen.

Das Zugangsattribut kann zumindest eine Anweisung umfassen oder einer Anweisung entsprechen. Die Anweisung definiert die Art und Weise der Gewährung des Zugangs zu dem physischen Bereich näher. Die Anweisung ist keine Voraussetzung für die Gewährung des Zugangs zu dem physischen Bereich. Die Anweisung kann umfassen, wie die Gewährung des Zugangs visuell und/oder akustisch in der Zugangskontrollvorrichtung angezeigt wird. Alternativ oder zusätzlich kann die Anweisung umfassen, wie die Gewährung des Zugangs beendet wird, z. B. nach einer vorbestimmten Zeitspanne nach Beginn der Gewährung, an einem vorbestimmten Zeitpunkt unabhängig von dem Beginn der Gewährung oder nach einer vorgegebenen Anzahl der erfolgten Gewährungen. Die Anweisung kann ebenfalls umfassen, ob Informationen über die Gewährung des Zugangs an die mobile Vorrichtung gesendet werden.

Die Daten für die zumindest eine Anweisung können insbesondere anstelle der vollständigen Anweisung als Zugangsattribut vorgesehen sein. Die Zugangskontrollvorrichtung kann mittels der Daten für die Anweisung die dazugehörige Anweisung durchführen. Werden Daten für die Anweisung als Zugangsattribut übermittelt, so kann die übrige Anweisung in der Zugangskontrollvorrichtung hinterlegt sein. Hierbei kann die Anweisung mittels der von der mobilen Vorrichtung übermittelten Daten für die Anweisung vervollständigt werden.

Die Zugangskontrollvorrichtung kann bevorzugt über die Empfangseinheit das zumindest eine Zugangsattribut empfangen. Es können auch mehrere Zugangsattribute der Zugangsinformation von der Zugangskontrolleinheit empfangen werden.

Die Regel, die in der Zugangskontrollvorrichtung zur zumindest teilweise Öffnung der Programmierschnittstelle und/oder zur Gewährung des Zugangs zu überprüfen ist, kann der folgenden Regel entsprechen oder die folgende Regel umfassen: Es ist ein Vergleichswert mit einem Überprüfwert zu vergleichen (Regel a.). Der Vergleichswert und/oder der Überprüfwert können Code-artig, insbesondere als ein Hashwert oder als eine elektronische Signatur, ausgebildet sein. Durch den Vergleich wird die mobile Vorrichtung als prinzipiell berechtigt identifiziert. Der Vergleich des Vergleichswerts mit dem Überprüfwert wird insbesondere dann verwendet, wenn besonders sichergestellt werden soll, dass die mobile Vorrichtung berechtigt ist. Wird der Vergleich des Vergleichswerts mit dem Überprüfwert mit einem positiven Ergebnis verglichen, so ist zumindest eine Voraussetzung zur zumindest teilweisen Öffnung der Programmierschnittstelle und/oder zur Gewährung des Zugangs erfüllt.

Besonders bevorzugt übermittelt die mobile Vorrichtung zunächst den Vergleichswert an die Zugangskontrollvorrichtung, damit die Zugangskontrollvorrichtung überprüfen kann, ob die Programmierschnittstelle zumindest teilweise zu öffnen ist und/oder ob der Zugang zu gewähren ist. Anders ausgedrückt, wird der aktuell übermittelte Vergleichswert für den Vergleich verwendet. Der Vergleichswert kann verschlüsselt sein. Der Vergleichswert kann derart verschlüsselt sein, dass der Vergleichswert von der mobilen Vorrichtung unentschlüsselbar ist. Insbesondere kann der verschlüsselte Anteil den Vergleichswert enthalten.

Der Vergleichswert wird insbesondere stets von der mobilen Vorrichtung an die Zugangskontrollvorrichtung übermittelt, bevor überprüft wird, ob die Programmierschnittstelle zumindest teilweise zu öffnen ist und/oder ob der Zugang zu gewähren ist. Die Übermittlung des Vergleichswerts ist insbesondere stets Teil des aktuellen Zugangskontrollverfahrens und/oder des aktuellen Verfahrens zur Öffnung der Programmierschnittstelle. Entfällt eine Übermittlung des Vergleichswerts in dem aktuellen Verfahren, so bleibt bevorzugt die Programmierschnittstelle geschlossen und/oder der Zugang bleibt verwehrt. Es ist denkbar, dass eine Speicherung des Vergleichswerts in der Zugangskontrollvorrichtung nach dem Vergleich unterbleibt.

Bevorzugt wird der Überprüfwert von der mobilen Vorrichtung an die Zugangskontrollvorrichtung übermittelt. Die mobile Vorrichtung enthält den Überprüfwert. Der Überprüfwert wird insbesondere der mobilen Vorrichtung von der Zugangsverwaltungsvorrichtung zur Verfügung gestellt. Der Überprüfwert kann z. B. in dem lesbaren Anteil enthalten sein. Alternativ kann der Überprüfwert z. B. von der Zugangsverwaltungsvorrichtung der mobilen Vorrichtung zusätzlich zu der Zugangsinformation zur Verfügung gestellt worden sein.

Der Überprüfwert kann verschlüsselt sein.

Der Überprüfwert wird bevorzugt stets von der mobilen Vorrichtung an die Zugangskontrollvorrichtung übermittelt, bevor überprüft wird, ob die Programmierschnittstelle zumindest teilweise zu öffnen ist und/oder ob der Zugang zu gewähren ist. Die Übermittlung des Überprüfwerts ist insbesondere stets Teil des aktuellen Zugangskontrollverfahrens und/oder des aktuellen Verfahrens zur Öffnung der Programmierschnittstelle. Entfällt eine Übermittlung des Überprüfwerts in dem aktuellen Verfahren, so bleibt bevorzugt die Programmierschnittstelle geschlossen und/oder der Zugang bleibt verwehrt.

Es ist denkbar, dass der Vergleichswert und der Überprüfwert stets in dem aktuellen Verfahren übermittelt werden, bevor ein Vergleich des Vergleichswerts mit dem Überprüfwert erfolgt, so dass die Zugangskontrollvorrichtung den übermittelten Vergleichswert und den übermittelten Überprüfwert stets verwendet. Somit ist es nicht notwendig, den Vergleichswert und/oder den Überprüfwert in der Zugangskontrollvorrichtung zu speichern. Vielmehr wird der Zugang verweigert, wenn der Vergleichswert und der Überprüfwert von der mobilen Vorrichtung nicht an die Zugangskontrollvorrichtung während des aktuellen Verfahrens zur Gewährung des Zugangs und/oder zur Öffnung der Programmierschnittstelle übermittelt werden. Somit wird stets die Verwendung eines aktuellen Vergleichswerts und eines aktuellen Überprüfwerts gewährleistet, insbesondere ohne umfangreiche Updates an der Zugangskontrollvorrichtung durchführen zu müssen.

Die Regel, die in der Zugangskontrollvorrichtung zur zumindest teilweise Öffnung der Programmierschnittstelle und/oder zur Gewährung des Zugangs zu überprüfen ist, kann der folgenden Regel entsprechen oder die folgende Regel umfassen: Es ist zu überprüfen, ob eine aktuelle Zeit sich in einem vorgegebenen Zeitbereich befindet (Regel b.). Der Zeitbereich kann Uhrzeiten, Wochentage, Arbeits- und arbeitsfreie Tage, Monate und/oder Jahre umfassen. Der Zeitbereich kann verschlüsselt von der mobilen Vorrichtung an die Zugangskontrollvorrichtung während des Zugangskontrollverfahrens und/oder des Verfahrens zur Öffnung der Programmierschnittstelle übermittelt werden. Insbesondere kann der verschlüsselte Anteil den Zeitbereich umfassen. Wird stets der Zeitbereich im aktuellen Zugangskontrollverfahren und/oder in dem aktuellen Verfahren zur Öffnung der Programmierschnittstelle übermittelt, so entfällt die Notwendigkeit den Zeitbereich in der Zugangskontrollvorrichtung zu speichern. Befindet sich die aktuelle Zeit in dem vorgegebenen Zeitbereich, so ist zumindest eine Voraussetzung zur zumindest teilweisen Öffnung der Programmierschnittstelle und/oder zur Gewährung des Zugangs erfüllt.

Die Regel, die in der Zugangskontrollvorrichtung zur zumindest teilweise Öffnung der Programmierschnittstelle und/oder zur Gewährung des Zugangs zu überprüfen ist, kann der folgenden Regel entsprechen oder die folgende Regel umfassen: Eine weitere Authentifizierung, insbesondere mittels eines Codes oder einer biometrischen Erkennung, ist vorzunehmen (Regel c.). Bevorzugt führt die Zugangskontrollvorrichtung die weitere Authentifizierung durch. Hierzu wird ein Kontrollwert mit einem Code oder einer biometrischen Kennung verglichen. Der Code und/oder die biometrische Erkennung kann an der mobilen Vorrichtung eingegeben bzw. erfasst und an die Zugangskontrollvorrichtung übermittelt werden. Der Vergleich des Codes und/oder der biometrischen Erkennung mit dem Kontrollwert erfolgt in der Zugangskontrollvorrichtung. Bei einem positiven Vergleich liegt die weitere Authentifizierung vor. Liegt die weitere Authentifizierung vor, so ist zumindest eine Voraussetzung zur zumindest teilweisen Öffnung der Programmierschnittstelle und/oder zur Gewährung des Zugangs erfüllt.

Der Kontrollwert für die Authentifizierung kann von der Zugangskontrollvorrichtung während des Zugangskontrollverfahrens und/oder während des Verfahrens zur Öffnung der Programmierschnittstelle verschlüsselt von der mobilen Vorrichtung empfangen werden. Der Kontrollwert kann einen Kontrollcode und/oder einen Kontrollbiometrie-Erkennung umfassen. Insbesondere kann der verschlüsselte Anteil den Kontrollwert umfassen. Hierdurch entfällt die Notwendigkeit, den Kontrollwert in der Zugangskontrollvorrichtung zu speichern.

Die Regel, die in der Zugangskontrollvorrichtung zur zumindest teilweise Öffnung der Programmierschnittstelle und/oder zur Gewährung des Zugangs zu überprüfen ist, kann der folgenden Regel entsprechen oder die folgende Regel umfassen: Eine Kennzeichnung, die den Benutzer als einen Wächter kenntlich macht, ist zu überprüfen (Regel d.). Es kann gewünscht sein, dass ein Wächter sich auf einem Rundgang an der Zugangskontrollvorrichtung identifiziert, um das ordnungsgemäße Abgehen des Rundgangs zu erfassen. Es kann wünschenswert sein, dass dem Wächter kein Zugang gewährt wird und/oder die Programmierschnittstelle geschlossen bleibt. Bei einer positiven Kennzeichnung als Wächter wird somit der Zugang verweigert und/oder die Programmierschnittstelle bleibt geschlossen.

Die positive bzw. negative Kennzeichnung als Wächter kann verschlüsselt von der mobilen Vorrichtung an die Zugangskontrollvorrichtung während des Zugangskontrollverfahrens übermittelt werden. Insbesondere kann der verschlüsselte Anteil die positive bzw. negative Kennzeichnung als Wächter umfassen. Wird stets die positive bzw. negative Kennzeichnung als Wächter im aktuellen Zugangskontrollverfahren und/oder in dem aktuellen Verfahren zur Öffnung der Programmierschnittstelle übermittelt, so entfällt die Notwendigkeit die Kennzeichnung zu speichern.

Die Regel, die in der Zugangskontrollvorrichtung zur zumindest teilweise Öffnung der Programmierschnittstelle und/oder zur Gewährung des Zugangs zu überprüfen ist, kann der folgenden Regel entsprechen oder die folgende Regel umfassen: Ein positives Ergebnis einer Regel, die in der mobilen Vorrichtung zu prüfen ist, muss vorliegen (Regel e.). Es kann wünschenswert sein, wenn zumindest eine Regel zur Gewährung des Zugangs zu dem physischen Bereich und/oder zur zumindest teilweisen Öffnung der Programmierschnittstelle in der mobilen Vorrichtung geprüft wird. Die in der mobilen Vorrichtung zu überprüfende Regel kann dabei z. B. auf Informationen zugreifen, die der Zugangskontrollvorrichtung nicht zur Verfügung stehen. Beispielsweise kann die mobile Vorrichtung überprüfen, ob eine Zahlung erfolgt ist oder ein Zahlungseingang verzeichnet worden ist, ob eine Benutzerordnung für den physischen Bereich akzeptiert wurde oder ob eine Sicherheitsunterweisung positiv abgeschlossen wurde. Ebenfalls ist es denkbar, dass die einer weiteren Authentifizierung, insbesondere mittels der Eingabe eines Codes oder einer biometrischen Erkennung in der mobilen Vorrichtung überprüft wird, insbesondere wenn der Kontrollwert in der mobilen Vorrichtung gespeichert ist.

Das Zugangsattribut kann einen Kennwert umfassen, der die Notwendigkeit, das Ergebnis der Überprüfung der Regel in der mobilen Vorrichtung bei der Gewährung des Zugangs zu und/oder bei der Öffnung der Programmierschnittstelle berücksichtigen, beinhaltet. Ist eine Regel in der mobilen Vorrichtung zu prüfen, so erwartet die Zugangskontrollvorrichtung das positive Ergebnis der in der mobilen Vorrichtung zu überprüfenden Regel innerhalb eines Zeitrahmens. Erhält die Zugangskontrollvorrichtung nicht innerhalb des Zeitrahmens das positive Ergebnis der in der mobilen Vorrichtung zu überprüfenden Regel, so bleibt der Zugang verwehrt und/oder die Programmierschnittstelle geschlossen.

Der Vergleichswert, der Zeitbereich, der Kontrollwert, die Kennzeichnung als Wächter und/oder der Kennwert entspricht somit Daten für eine Regel, die das Zugangsattribut umfassen kann.

Die Überprüfung einer Regel des Regeltyps a., c., d. und/oder e. kann nur für ein vorgegebenes Zeitfenster in dem Zugangskontrollverfahren und/oder in dem Verfahren zur Öffnung der Programmierschnittstelle vorgesehen sein. Dieses gilt besonders bevorzugt für die Regeln des Regeltyps c., d. und/oder e.. Außerhalb des Zeitfensters unterbleibt eine Überprüfung der Regel, die einem Zeitfenster zugeordnet ist. Beispielsweise muss nur an Wochenenden eine weitere Authentifizierung mittels eines PIN-Codes erfolgen. Innerhalb der Arbeitswoche entfällt die Notwendigkeit einer weiteren Authentifizierung. In diesem Fall würde eine Regel des Regeltyps c. im dem Zeitfenster "Wochenende" zu überprüfen sein. Innerhalb der Arbeitswoche unterbleibt die weitere Authentifizierung als Voraussetzung für die Gewährung des Zugangs und/oder Öffnung der Programmierschnittstelle.

Die Zugangsinformation, insbesondere der verschlüsselte Anteil, kann das Zeitfenster umfassen. In der Zugangsinformation kann diejenige Regel, die nur in dem Zeitfenster zu prüfen ist, das entsprechende Zeitfenster umfassen. Das Zugangsattribut kann die Regel, die das Zeitfenster beinhaltet, umfassen.

Zur Öffnung der Programmierschnittstelle wird bevorzugt zumindest Regel a. überprüft. Insbesondere kann die Regel a. diejenige Regel sein, die sowohl zur zumindest teilweisen Öffnung der Programmierschnittstelle als auch zur Gewährung des Zugangs überprüft wird. Es ist denkbar, dass ein positives Ergebnis der Überprüfung der Regeln b., c. und/oder d. zur zumindest teilweise Öffnung der Programmierschnittstelle keine Voraussetzung ist.

Es ist denkbar, dass die Zugangskontrollvorrichtung von der mobilen Vorrichtung Daten für die zumindest eine Regel, die in der Zugangskontrollvorrichtung zu überprüfen ist und/oder die zumindest eine Regel, die in der Zugangskontrollvorrichtung zu überprüfen ist, empfängt. Die Zugangskontrollvorrichtung kann somit die Regeln, die von der Zugangskontrollvorrichtung zu überprüfen sind, um Zugang zu dem physischen Bereich zu gewähren und/oder um die Programmierschnittstelle zu öffnen, von der mobilen Vorrichtung empfangen. Beispielsweise kann die Zugangskontrollvorrichtung den Vergleichswert und/oder den Überprüfwert von der mobilen Vorrichtung empfangen. Der Vergleichswert kann Daten für eine Regel und damit einem Zugangsattribut entsprechen.

Die Daten für die zumindest eine Regel und/oder die Regel werden bevorzugt über die Kommunikationsschnittstelle empfangen.

Bevorzugt wird die empfangene Regel und/oder die empfangenen Daten für eine Regel in dem aktuellen Zugangskontrollverfahren und/oder zur Öffnung der Programmierschnittstelle unmittelbar verwendet.

Besonders bevorzugt verwendet die Zugangskontrollvorrichtung die empfangenen Daten für die zumindest eine Regel und/oder die empfangene zumindest eine Regel nur zur aktuellen Gewährung des Zugangs zu dem physischen Bereich und/oder zur aktuellen Öffnung der Programmierschnittstelle. Bevorzugt unterbleibt eine Speicherung der übermittelten Regel oder der übermittelten Daten für eine Regel. Hierdurch kann eine Kommunikation der Zugangskontrollvorrichtung mit der mobilen Vorrichtung und/oder die Speicherkapazitäten der Zugangskontrollvorrichtung schlank gehalten werden. Zudem wird stets die Verwendung aktueller Daten erreicht.

Ebenfalls kann zumindest eine Anweisung oder Daten für zumindest eine Anweisung von der mobilen Vorrichtung auf die Zugangskontrollvorrichtung übertragen werden. Die zumindest eine Anweisung oder die Daten für die zumindest eine Anweisung werden bevorzugt in dem aktuellen Zugangskontrollverfahren verwendet. Besonders bevorzugt werden die Anweisung oder die Daten für die zumindest eine Anweisung nur bei der aktuellen Gewährung des Zugangs verwendet.

Die Zugangskontrollvorrichtung kann zumindest eine aktualisierte Fassung einer Firmware und/oder eine zusätzliche Firmware über die Programmierschnittstelle empfangen. Dieses kann jedoch nur eine Möglichkeit sein. Insbesondere sind auch Ausführungsformen denkbar, in denen die Programmierschnittstelle nicht oder nicht ausschließlich Firmware über die Programmierschnittstelle empfängt.

Zusätzlich oder alternativ kann die Zugangskontrollvorrichtung zumindest eine aktualisierte Fassung einer Zugangskontrollvorrichtungskennung über die Programmierschnittstelle empfangen. Die Zugangskontrollvorrichtung ist eingerichtet, die Zugangskontrollvorrichtungskennung an die mobile Vorrichtung zu übermitteln und von der mobilen Vorrichtung die Zugangsinformation oder zumindest ein Zugangsattribut für die Zugangskontrollvorrichtung, deren Zugangskontrollvorrichtungskennung die mobile Vorrichtung erhalten hat, zu empfangen. Die mobile Vorrichtung kann anhand der Zugangskontrollvorrichtungskennung die passende Zugangsinformation auswählen.

Zusätzlich oder alternativ kann die Zugangskontrollvorrichtung zumindest eine aktualisierte Fassung zumindest eines Voreinstellungsattributs, bevorzugt mehrerer Voreinstellungsattribute über die Programmierschnittstelle empfangen. Das Voreinstellungsattribut kann in der Zugangskontrollvorrichtung hinterlegt sein. Das Voreinstellungsattribut kann eine Regel, Daten für eine Regel, eine Anweisung und/oder Daten für eine Anweisung des Zugangsattributs ersetzen. Das von der mobilen Vorrichtung übermittelte Zugangsattribut übersteuert bevorzugt das Voreinstellungsattribut. Das von der mobilen Vorrichtung übermittelte Zugangsattribut und das Voreinstellungsattribut gehören hierbei zu derselben Regel oder zu derselben Anweisung. Anders ausgedrückt, liegt ein von der mobilen Vorrichtung in dem aktuellen Zugangskontrollverfahren übermitteltes Zugangsattribut vor, so wird in dem aktuellen Zugangskontrollverfahren das von der mobilen Vorrichtung übermittelte Zugangsattribut verwendet, während das Voreinstellungsattribut in dem aktuellen Zugangskontrollverfahren unberücksichtigt bleibt. Bevorzugt sind für mehrere Zugangsattribute, die von der mobilen Vorrichtung übermittelbar sind, ein Voreinstellungsattribut in der Zugangskontrollvorrichtung hinterlegt.

Zusätzlich oder alternativ kann die Zugangskontrollvorrichtung zumindest eine aktualisierte Fassung eine aktualisierte Fassung von Daten, um eine Entschlüsselung durchführen zu können, über die Programmierschnittstelle empfangen.

Zusätzlich oder alternativ kann die Zugangskontrollvorrichtung zumindest eine Sperrliste, in denen die mobilen Vorrichtungen aufgeführt sind, denen der Zugang zu verwehren ist, über die Programmierschnittstelle empfangen. Die Sperrliste kann insbesondere eine aktualisierte Fassung sein.

Zusätzlich oder alternativ kann die Zugangskontrollvorrichtung zumindest eine aktualisierte Fassung zumindest eine Anweisung zum Ansteuern der Zugangskontrollvorrichtung und/oder einen Steuerbefehl zum Ansteuern der Zugangskontrollvorrichtung über die Programmierschnittstelle empfangen.

Der Steuerbefehl kann insbesondere zur Aktivierung einer Anweisung dienen. Die Steuerbefehle können spezielle Anweisungen aktivieren. Die Anweisungen können in der Zugangskontrollvorrichtung hinterlegt sein. Die Steuerbefehle können z. B. für den akustische Tongeber und/oder die Lichtquelle der Zugangskontrollvorrichtung vorgesehen sein. Der Steuerbefehl und/oder die Anweisung kann die Art und Weise des akustischen und/oder visuellen Anzeigens betreffen, z. B. die Lautstärke, die Tonlänge oder -höhe, die Farbe, die Helligkeit und/oder eine Blinkfrequenz. Bevorzugt ist vorgesehen, dass die Zugangskontrollvorrichtung die Programmierschnittstelle zumindest teilweise öffnet, bevor die Zugangskontrollvorrichtung Zugang zu dem physischen Bereich gewährt hat. Hierdurch ist es möglich, dass die Programmierschnittstelle zur Verfügung steht, um Daten für das aktuellen Zugangskontrollverfahren zu empfangen.

So kann die Programmierschnittstelle geöffnet werden, um Daten zur Überprüfung einer Regel, insbesondere einer weiteren Regel, zur Gewährung des Zugangs in der Zugangskontrollvorrichtung zu erhalten. Ein positives Ergebnis der Überprüfung der weiteren Regel kann dabei Voraussetzung für die Gewährung des Zugangs sein. Z. B. können biometrische Daten eines Benutzers über die Programmierschnittstelle an die Zugangskontrollvorrichtung übermittelt werden. Die biometrischen Daten können mittels der mobilen Vorrichtung erfasst werden.

Die Programmierschnittstelle kann geöffnet werden, um Ergebnisse einer Überprüfung einer Regel zur Gewährung des Zugangs, die in der mobilen Vorrichtung überprüft wird, zu erhalten.

Die Programmierschnittstelle kann geöffnet werden, um einen Steuerbefehl zu erhalten.

Der Steuerbefehl kann einem Befehl zur Art und Weise der Gewährung des Zugangs entsprechen. So kann der Steuerbefehl einer Anweisung entsprechen oder Daten für eine Anweisung umfassen. Der Steuerbefehl kann zur Aktivierung einer in der Zugangskontrollvorrichtung hinterlegten Anweisung dienen.

Der Steuerbefehl kann einem Öffnungsbefehl entsprechen. Die Programmierschnittstelle kann geöffnet werden, um einen Öffnungsbefehl zu erhalten. Es kann sein, dass die mobile Vorrichtung entscheidet, ob der Zugang gewährt wird. Hierzu überprüft insbesondere die mobile Vorrichtung eine Regel zur Gewährung des Zugangs. Wird der Zugang gewährt, so kann die mobile Vorrichtung den Öffnungsbefehl an die Zugangskontrollvorrichtung senden. Wird der Öffnungsbefehl von der Zugangskontrollvorrichtung empfangen, so gewährt die Zugangskontrollvorrichtung ohne weitere Überprüfung den Zugang.

Über die Kommunikationsschnittstelle empfängt die Zugangskontrollvorrichtung insbesondere den verschlüsselten Anteil. Dadurch, dass der Bediener der mobilen Vorrichtung den verschlüsselten Anteil nicht entschlüsseln kann, hat der Bediener keine Möglichkeit, den verschlüsselten Anteil zu ändern.

Über die Programmierschnittstelle (API) kann insbesondere zwischen Softwareprogrammen oder -programmteilen eine Datenübergabe erfolgen. Hierbei können die mobile Vorrichtung und die Zugangskontrollvorrichtung jeweils ein Softwareprogramm oder -programmteil umfassen. Die Programmierschnittstelle dient dazu, die Daten von dem Softwareprogramm oder -programmteil der mobilen Vorrichtung mit dem Softwareprogramm oder -programmteil der Zugangskontrollvorrichtung zu empfangen.

Insbesondere kann der Bediener der mobilen Vorrichtung Eingaben an der mobilen Vorrichtung vornehmen, um den Steuerbefehl, der über die Programmiervorrichtung (API) von der Zugangskontrollvorrichtung empfangen wird, vor dem Senden zu verändern. Beispielsweise umfasst die mobile Vorrichtung eine Software, insbesondere eine App, auf der eine Anweisung, d. h. die Art und Weise des Zugangs, z. B. die Blinkfrequenz der Lichtquelle oder die Länge des Zugangs, von dem Bediener einstellbar ist. Gemäß der Einstellung der App wird ein entsprechender Steuerbefehl von der mobilen Vorrichtung generiert. Auch ist es denkbar, dass über einen Programmablauf einer Software der mobilen Vorrichtung die Anweisung, d. h. die Art und Weise des Zugangs, z. B. die Blinkfrequenz der Lichtquelle oder die Länge des Zugangs, steuerbar ist. Die Software kann im Programmablauf Daten erhalten, auf deren Basis die Software einen entsprechenden Steuerbefehl generiert oder ändert.

Die Zugangskontrollvorrichtung empfängt den Steuerbefehl über die Programmierschnittstelle und verwendet den Steuerbefehl im aktuellen Zugangskontrollverfahren. Hierdurch leuchtet z. B. die Lichtquelle der Zugangskontrollvorrichtung in der von dem Bediener gewünschten oder von dem Programmablauf der Software der mobilen Vorrichtung vorgegebenen Blinkfrequenz. Durch die Programmierschnittstelle (API) ist es besonders gut möglich, auf sichere Art komplexe Steuerbefehle zu übermitteln.

Es ist denkbar, dass der Steuerbefehl die Anweisungen oder die Daten für die Anweisungen des verschlüsselten Anteils übersteuert. Alternativ kann es sein, dass der verschlüsselte Anteil keine entsprechenden Anweisungen oder entsprechende Daten für Anweisungen enthält. Es ist denkbar, dass der Steuerbefehl Voreinstellungsattribute übersteuert.

Alternativ dazu, dass die Öffnung der Programmierschnittstelle vor der Gewährung des Zugangs erfolgt, kann die Programmierschnittstelle erst mit oder nach Gewährung des Zugangs geöffnet werden. Hierdurch wird eine besondere Sicherheit erreicht, um Daten über die Programmierschnittstelle übertragen zu dürfen. Dieses gilt insbesondere für besonders sicherheitsrelevante Daten, wie eine aktualisierte Fassung einer Firmware und/oder eine zusätzliche Firmware, eine aktualisierte Fassung einer Zugangskontrollvorrichtungskennung, eine aktualisierte Fassung zumindest eines Voreinstellungsattributs, bevorzugt mehrerer Voreinstellungsattribute, eine aktualisierte Fassung einer Sperrliste und/oder eine aktualisierte Fassung von Daten, um eine Entschlüsselung durchführen zu können. Insbesondere kann es eines besonderen Befehls bedürfen, um die Programmierschnittstelle zur Übertragung der sicherheitsrelevanten Daten öffnen zu können.

Wird die Programmierschnittstelle mit der Gewährung des Zugangs geöffnet, so kann über die Programmierschnittstelle eine Anweisung oder einen Steuerbefehl zur Art und Weise der Gewährung des Zugangs erhalten werden.

Es kann vorgesehen sein, dass unterschiedliche Teile der Programmierschnittstelle von der Zugangskontrollvorrichtung öffenbar sind. Anders ausgedrückt, kann die Zugangskontrollvorrichtung die Programmierschnittstelle nurteilweise öffnen. Hierdurch ist der Empfang von einigen Daten über die Programmierschnittstelle gestattet, während der Empfang von anderen Daten über die Programmierschnittstelle verhindert bleibt. So bleibt die Programmierschnittstelle während der teilweise Öffnung teilweise geschlossen. Beispielsweise ist es möglich, Steuerbefehle oder Anweisungen über die Programmierschnittstelle zu empfangen, während ein Empfang einer aktualisierte Fassung einer Firmware, einer zusätzlichen Firmware, einer aktualisierte Fassung einer Zugangskontrollvorrichtungskennung, einer aktualisierte Fassung zumindest eines Voreinstellungsattributs, bevorzugt mehrerer Voreinstellungsattribute, einer Sperrliste und/oder einer aktualisierte Fassung von Daten zur Durchführung einer Entschlüsselung verhindert ist.

Insbesondere umfasst die mobile Vorrichtung zumindest einen Befehl oder Daten für zumindest einen Befehl. Die mobile Vorrichtung übermittelt den Befehl oder die Daten für den Befehl an die Zugangskontrollvorrichtung. Der Befehl kann lauten, die Programmierschnittstelle teilweise zu öffnen. Der Befehl kann umfassen, für welche Daten die Programmierschnittstelle zu öffnen ist. Der Befehl kann umfassen, für welcher Teil der Programmierschnittstelle zu öffnen ist. Der Befehl kann z. B. lauten, die Programmierschnittstelle für zumindest eine der folgenden Daten: einer aktualisierte Fassung einer Firmware, einer zusätzlichen Firmware, einer aktualisierte Fassung einer Zugangskontrollvorrichtungskennung, einer aktualisierte Fassung zumindest eines Voreinstellungsattributs, bevorzugt mehrerer Voreinstellungsattribute, einer Sperrliste, einer aktualisierte Fassung von Daten zur Durchführung einer Entschlüsselung, einer Anweisung und/oder eines Steuerbefehls, insbesondere eines Öffnungsbefehls, zu öffnen.

Die Befehle oder Daten der Befehle können verschlüsselt von der mobilen Vorrichtung an die Zugangskontrollvorrichtung übermittelt werden.

Z. B. kann die Zugangsinformation, insbesondere der verschlüsselte Anteil, den Befehl oder die Daten für den Befehl umfassen.

Es ist denkbar, dass nur bei wenigen Zugangskontrollvorrichtungen die Datenübertragung von zumindest einer der genannten sicherheitsrelevanten Daten erlaubt ist. Insbesondere können unterschiedliche Zugangsinformationen den Empfang jeweils unterschiedliche sicherheitsrelevanter Daten ermöglichen.

Bevorzugt ist vorgesehen, dass die Zugangskontrollvorrichtung die Programmierschnittstelle nach einer vorgegebenen Zeitdauer schließt. Die vorgegebene Zeitdauer kann in der Zugangskontrollvorrichtung hinterlegt sein.

Es kann vorgesehen sein, dass die Zugangskontrollvorrichtung den Ausgang eines Zugangskontrollverfahrens zur Gewährung des Zugangs zu dem physischen Bereich und/oder von Merkmalen des Zugangskontrollverfahrens, insbesondere von über die Programmierschnittstelle empfangene Steuerbefehlen oder Anweisungen, an die mobile Vorrichtung sendet, nachdem ein Aufforderungsbefehl zum Senden des Ausgangs des Zugangskontrollverfahrens und/oder der Merkmale des Zugangskontrollverfahrens der mobilen Vorrichtung von der Zugangskontrollvorrichtung empfangen wurde, wobei insbesondere ein Benutzer willentlich den Aufforderungsbefehl initiiert. Bei einer willentlichen Initiierung der Zurücksendung von Informationen an die mobile Vorrichtung kann der Datenfluss bewusst gesteuert werden. Wird die Sendung der Informationen nicht angefordert, so kann die Kommunikation der Zugangskontrollvorrichtung mit der mobilen Vorrichtung schlank gehalten werden.

Die Aufgabenstellung der Erfindung wird auch durch ein erfindungsgemäßes Zugangskontrollsystem gelöst. Das erfindungsgemäße Zugangskontrollsystem umfasst die erfindungsgemäße Zugangskontrollvorrichtung, so wie die Zugangskontrollvorrichtung innerhalb dieser Offenbarung beschrieben ist. Das Zugangskontrollsystem umfasst zudem eine mobile Vorrichtung, die zur drahtlosen Kommunikation mit der Zugangskontrollvorrichtung über die Programmierschnittstelle ausgebildet ist. Die mobile Vorrichtung kann wie beschrieben ausgebildet sein. Die mobile Vorrichtung und die Zugangskontrollvorrichtung können miteinander wie beschrieben interagieren.

Insbesondere kann die mobile Vorrichtung eine Zugangsinformation umfassen, wobei die Zugangsinformation einen verschlüsselten Anteil, der von der mobilen Vorrichtung unentschlüsselbar ist, umfasst. Insbesondere kann der verschlüsselte Anteil ein zu übermittelndes Zugangsattribut, insbesondere eine zu überprüfende Regel oder Daten für eine zu überprüfende Regel, umfassen. Die Regel kann zur Gewährung des Zugangs und/oder zur Öffnung der Programmierschnittstelle dienen.

Es ist denkbar, dass die mobile Vorrichtung eine Regel zur Gewährung des Zugangs zu dem physischen Bereich überprüft, und die Zugangskontrollvorrichtung das Ergebnis der Überprüfung über die Programmierschnittstelle erhält. Die von der mobilen Vorrichtung überprüften Regel ist insbesondere eine zusätzliche Regel, während zumindest eine weitere Regel zur Gewährung des Zugangs in der Zugangskontrollvorrichtung überprüft wird.

Die Aufgabenstellung der Erfindung wird auch durch ein Verfahren zur Übermittlung von Daten von einer mobilen Vorrichtung an eine Zugangskontrollvorrichtung, insbesondere nach einem der Ansprüche 1 bis 10, gelöst. Das Verfahren kann mit dem erfindungsgemäßen Zugangskontrollsystem, insbesondere mit einem Zugangskontrollsystem nach einem der Ansprüche 11 bis 13, durchführbar sein.

Die Zugangskontrollvorrichtung für das erfindungsgemäße Verfahren ist zur Zuordnung zu einem physischen Bereich, zu dem mittels der Zugangskontrollvorrichtung Zugang gewährbar ist, ausgebildet. Die Zugangskontrollvorrichtung umfasst eine Programmierschnittstelle.

Erfindungsgemäß ist vorgesehen, dass die Zugangskontrollvorrichtung die Programmierschnittstelle verwendet, um die Daten drahtlos von der mobilen Vorrichtung zu empfangen.

Das erfindungsgemäße Verfahren kann ein Zugangskontrollverfahren umfassen und/oder Teil eines Zugangskontrollverfahrens sein. Das erfindungsgemäße Verfahren kann das Verfahren zur Öffnung der Programmierschnittstelle umfassen.

Die Erfindung wird nachfolgend anhand von Ausführungsbeispielen näher erläutert. Technische Merkmale mit gleicher Funktion sind in den Figuren mit identischen Bezugszeichen versehen. Es zeigen:
Fig. 1 eine erfindungsgemäße Zugangskontrollvorrichtung und ein erfindungsgemäßes Zugangskontrollsystem mit einer erfindungsgemäßen Zugangskontrollvorrichtung und gemäß einem ersten Ausführungsbeispiel,
Fig. 2 die Zugangskontrollvorrichtung und das Zugangskontrollsystem aus Figur 1, bei dem die Übertragung von Zugangsattributen dargestellt ist,
Fig. 3 eine Explosionsdarstellung eines Teils der erfindungsgemäßen Zugangskontrollvorrichtung,
Fig. 4 ein erfindungsgemäßes Verfahren gemäß einem ersten Ausführungsbeispiel,
Fig. 5 ein erfindungsgemäßes Verfahren gemäß einem zweiten Ausführungsbeispiel und
Fig. 6 ein erfindungsgemäßes Verfahren gemäß einem dritten Ausführungsbeispiel.

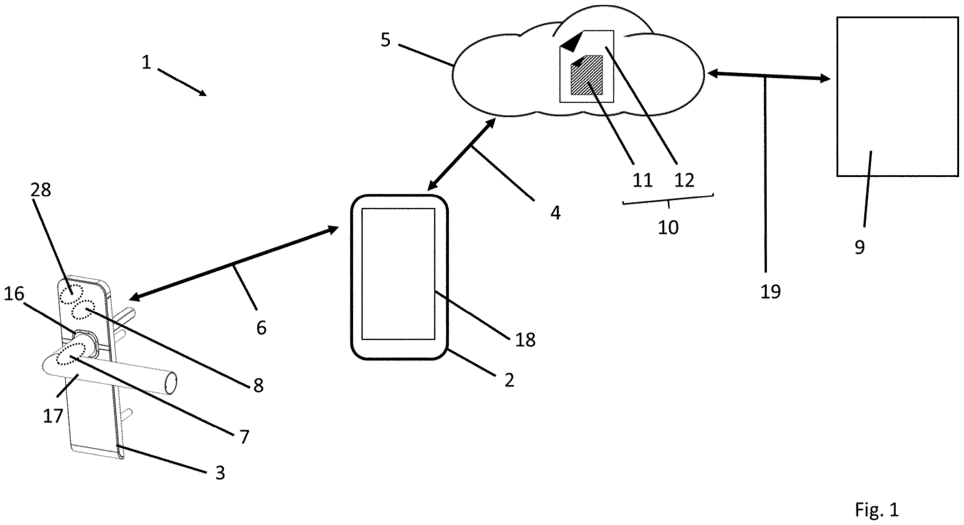

In Figur 1 ist eine erfindungsgemäße Zugangskontrollvorrichtung 3 und ein erfindungsgemäßes Zugangskontrollsystem 1 dargestellt. Das Zugangskontrollsystem 1 umfasst eine mobile Vorrichtung 2 und die erfindungsgemäße Zugangskontrollvorrichtung 3. Die mobile Vorrichtung 2 ist schematisch dargestellt. Die mobile Vorrichtung 2 ist als ein Smartphone ausgebildet. Die mobile Vorrichtung 2 umfasst ein Display 18. Die erfindungsgemäße Zugangskontrollvorrichtung 3 und das erfindungsgemäße Zugangskontrollsystem 1 können ein erfindungsgemäßes Verfahren 100, 200, 300 durchführen. Die mobile Vorrichtung 2 umfasst zumindest einen nicht dargestellten Prozessor zur Durchführung des erfindungsgemäßen Verfahrens 100, 200, 300. Die mobile Vorrichtung 2 kann hierbei einen Prozessor verwenden, mit dem auch weitere Funktionen der mobilen Vorrichtung 2 ausgeübt werden. Die mobile Vorrichtung umfasst eine erste Sende- und Empfangsvorrichtung um über ein Telekommunikationsnetz 4 z. B. mit einer Cloud 5 kommunizieren zu können.

Die Zugangskontrollvorrichtung 3 dient als festinstallierter Wächter eines durch eine Barriere versperrten, nicht dargestellten physischen Bereichs. In Figur 1 ist die Zugangskontrollvorrichtung 3 beispielhaft als elektromechanischer Beschlag 3 dargestellt. Rein beispielhaft ist ein derartiger Beschlag 3 in der EP2998484 A1 beschrieben. Alternativ kann die Zugangskontrollvorrichtung 3 als ein elektromechanischer Schließzylinder, als ein Türöffner oder als ein Motorschloss ausgebildet sein. Die Zugangskontrollvorrichtung 3 kann auch mehrteilig ausgebildet sein (nicht dargestellt). Die Zugangskontrollvorrichtung 3 kann z. B. einen Leser und ein Motorschloss, umfassen (nicht dargestellt). Der Leser und das Motorschloss können miteinander kabelgebunden oder kabellos miteinander kommunizieren.

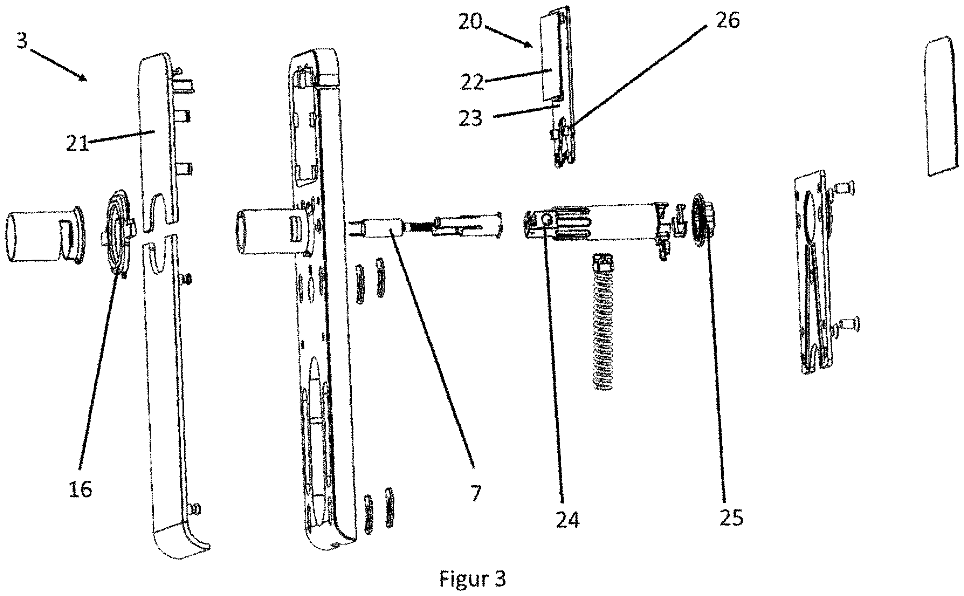

Die Zugangskontrollvorrichtung 3 und die mobile Vorrichtung 2 kommunizieren über eine Nahbereichskommunikationsverbindung 6, wie Bluetooth, BLE, RFID oder NFC, miteinander. Bevorzugt wird BLE verwendet. Die Nahbereichskommunikationsverbindung 6 ist rein schematisch als Doppelpfeil dargestellt. Für die Nahbereichskommunikationsverbindung 6 weist die mobile Vorrichtung 2 eine zweite nicht dargestellte Sende- und Empfangsvorrichtung auf. Für die Nahbereichskommunikationsverbindung 6 weist die Zugangskontrollvorrichtung 3 eine Sende- und Empfangseinheit 20 auf, die in Figur 3 dargestellt ist. Die Sende- und Empfangseinheit 20 befindet sich hinter einer Abdeckung 21 der Zugangskontrollvorrichtung 3. Die Sende- und Empfangseinheit 20 umfasst eine Antenne 22 und eine Sende- und Empfangsschaltung. Die Sende- und Empfangsschaltung kann auf einer Leiterkarte 23 ausgebildet sein.

Die Leiterkarte 23 umfasst einen nicht dargestellten Prozessor und einen Speicher.

Die Zugangskontrollvorrichtung 3 umfasst eine in Figur 1 rein schematisch und in Figur 3 figürlich dargestellte elektromechanische Vorrichtung 7. Die elektromechanische Vorrichtung 7 ist beispielhaft als ein Elektromotor ausgebildet. Die elektromechanische Vorrichtung 7 befindet sich im Inneren der Zugangskontrollvorrichtung 3 und ist daher in Figur 1 nur gestrichelt angedeutet. Die elektromechanische Vorrichtung 7 kann zur Gewährung des Zugangs zu dem physischen Bereich eine Handhabe 17 der Zugangskontrollvorrichtung 3 mit einem nicht dargestellten Schloss koppeln (s. Figur 1). Im gekoppelten Zustand kann ein Benutzer durch die Betätigung der Handhabe 17 das Schloss in einen entriegelten Zustand überführen. Im entkoppelten Zustand ist die Handhabe 17 von dem Schloss entkoppelt. Beispielsweise kann hierzu die elektromechanische Vorrichtung 7 ein Kupplungselement 24 in Eingriff und außer Eingriff mit einem Gegenkupplungselement 25 bringen (s. Figur 3). Dieses ist z. B. in der in der EP2998484 A1 beschrieben. Alternativ kann die elektromechanische Vorrichtung 7 selbsttätig das Schloss in einen entriegelten Zustand überführen, in dem die elektromechanische Vorrichtung 7 einen Riegel und/oder eine Falle zurückzieht. In einer weiteren Alternative kann die elektromechanische Vorrichtung 7 eine Falle eines Türöffners freigeben.

Die Zugangskontrollvorrichtung 3 umfasst eine Lichtleiter 16, wie in den Figuren 1 und 3 dargestellt. Hinter dem Lichtleiter 16 ist im Inneren der Zugangskontrollvorrichtung 3 eine Lichtquelle 26 angeordnet (s. Figur 3). Mittels der Lichtquelle 26 und dem Lichtleiter 16 kann die Zugangskontrollvorrichtung 3 eine Verwehrung des Zugangs und eine Gewährung des Zugangs durch unterschiedliche visuelle Signale anzeigen. Z. B. kann eine Verwehrung des Zugangs rot und eine Gewährung des Zugangs grün angezeigt werden.

Die Zugangskontrollvorrichtung 3 umfasst eine nicht dargestellten Tongeber, durch den eine Verwehrung des Zugangs und/oder eine Gewährung des Zugangs durch ein akustisches Signal anzeigt werden kann. Insbesondere wird nur die Gewährung des Zugangs akustisch angezeigt.

Die Zugangskontrollvorrichtung 3 umfasst einen nicht dargestellten Timer zur Messung der Zeit.

Erfindungsgemäß umfasst die Zugangskontrollvorrichtung 3 eine Programmierschnittstelle 8, die in Figur 1 rein schematisch angedeutet ist. Als Softwareschnittstelle wird die Programmierschnittstelle mittels des Prozessors und des Speichers realisiert. Daten für die Programmierschnittstelle 8 werden über die Sende- und Empfangseinheit 20 empfangen. Der Prozessor und der Speicher realisieren noch eine weitere Kommunikationsschnittstelle 28, die als Binärschnittstelle ausgebildet ist. Die Kommunikationsschnittstelle 28 ist in Figur 1 rein schematisch angedeutet. Daten für die Kommunikationsschnittstelle 28 werden ebenfalls über die Sende- und Empfangseinheit 20 empfangen. Daten für die Programmierschnittstelle 8 und für die Kommunikationsschnittstelle 28 werden dabei mit derselben Sendefrequenz von der mobilen Vorrichtung 2 an die Zugangskontrollvorrichtung 3 gesendet.

Erfindungsgemäß werden Daten für die Programmierschnittstelle 8 kabellos von der mobilen Vorrichtung 2 an die Zugangskontrollvorrichtung 3 übertragen. Hierdurch erhöht sich der Komfort für den Benutzer.

Die Programmierschnittstelle 8 kann zeitweise zumindest teilweise geöffnet sein, so dass Daten über die Programmierschnittstelle 8 empfangbar sind. Die Programmierschnittstelle 8 kann zeitweise geschlossen sein, so dass keine Daten über die Programmierschnittstelle empfangbar sind. Bevorzugt ist die Programmierschnittstelle 8 stets geschlossen, sofern keine Voraussetzung für die zumindest teilweise Öffnung der Programmierschnittstelle 8 vorliegt.

Die Programmierschnittstelle 8 wird zumindest teilweise geöffnet, wenn zumindest eine Regel in der Zugangskontrollvorrichtung 3 überprüft wurde und die Überprüfung mit einem positiven Ergebnis abgeschlossen wurde.

Die Überprüfung der Regel erfolgt nicht alleine mit dem Ziel, die Programmierschnittstelle 8 zu öffnen. Vielmehr wird die Regel auch überprüft, um zu überprüfen, ob Zugang zu dem physischen Bereich gewährt werden kann. Somit ist die Überprüfung der Regel zugleich Teil eines Zugangskontrollverfahrens 100, 200, 300. Ein Verfahren zur zumindest teilweisen Öffnung der Programmierschnittstelle 8 ist Teil des Zugangskontrollverfahrens 100, 200, 300.

Zu Beginn des Zugangskontrollverfahrens 100, 200, 300 verwehrt die Zugangskontrollvorrichtung 3 den Zugang zu dem physischen Bereich. Das Zugangskontrollverfahren 100, 200, 300 dient dazu zu überprüfen, ob dem Benutzer der mobilen Vorrichtung 2 der Zugang gewährt werden kann. Das Zugangskontrollverfahren 100, 200, 300 kann mit einer ersten Kommunikation der mobile Vorrichtung 2 und der Zugangskontrollvorrichtung 3 zum Zwecke der Gewährung des Zugangs zu dem physischen Bereich beginnen. Das Zugangskontrollverfahren 100, 200, 300 kann bei positivem Ergebnis der Überprüfung die Gewährung des Zugangs umfassen. Das Zugangskontrollverfahren kann bei positivem Ergebnis der Überprüfung mit der Gewährung des Zugangs oder dem Ende der Gewährung des Zugangs enden. Hierbei ist auch die Art und Weise der Gewährung des Zugangs Teil des Zugangskontrollverfahrens 100, 200, 300.

Die Zugangskontrollvorrichtung 3 kann eine oder auch mehrere Regeln überprüfen, um zu überprüfen, ob Zugang gewährt werden soll und/oder ob die Programmierschnittstelle 8 geöffnet werden soll. Bevorzugt dient die Überprüfung zumindest einer Regel sowohl zur Überprüfung, ob Zugang gewährt werden soll als auch zur Überprüfung, ob die Programmierschnittstelle 8 geöffnet werden soll.

Die Regel kann beinhalten, dass der Zugang nur nach einem positiven Ergebnis des Vergleichs eines Vergleichswerts mit einem Überprüfwert gewährt wird. Der Vergleichswert und/oder der Überprüfwert können als ein Code, insbesondere als ein Hashwert oder als eine elektronische Signatur, ausgebildet sein.

Die Regel kann die Überprüfung beinhalten, ob sich die aktuelle Zeit in einem vorgegebenen Zeitbereich befindet. Die Zugangskontrollvorrichtung 3 kennt die aktuelle Zeit mittels des Timers.

Die Regel kann beinhalten, dass die Zugangskontrollvorrichtung eine weitere Authentifizierung vorzunehmen hat. Die PIN-Eingabe zur Authentifizierung erfolgt nach einer Aufforderung an der mobilen Vorrichtung 2 und wird der Zugangskontrollvorrichtung 3 übermittelt, so dass die Zugangskontrollvorrichtung die weitere Authentifizierung durch einen Vergleich eines Kontrollwerts mit dem PIN, so wie der PIN an der mobilen Vorrichtung 2 eingegeben und der Zugangskontrollvorrichtung 3 übermittelt wurde, durchführen kann.

Die Regel kann beinhalten, dass die mobile Vorrichtung 2 eine Regel überprüft. Übermittelt die mobile Vorrichtung das Ergebnis innerhalb eines vorgegebenen Zeitrahmens an die Zugangskontrollvorrichtung, so ist die Regel mit einem positiven Ergebnis überprüft worden.

Bevorzugt ist zumindest ein positives Ergebnis eines Vergleichs des Vergleichswerts mit dem Überprüfwert als Voraussetzung für die Öffnung der Programmierschnittstelle 8 als auch zur Gewährung des Zugangs notwendig.

Die Zugangskontrollvorrichtung 3 erhält von der mobilen Vorrichtung 2 die Regel(n) und/oder Daten für die Regel(n) in dem aktuellen Verfahren 100, 200, 300. Hierdurch wird gewährleistet, dass stets aktuelle Daten verwendet werden.

Die mobile Vorrichtung 2 hat über das Telekommunikationsnetz 4 Zugriff auf die Cloud 5. Das Telekommunikationsnetz 4 ist schematisch als Doppelpfeil dargestellt. In der Cloud 5 sind befindet sich eine Zugangsinformation 10.

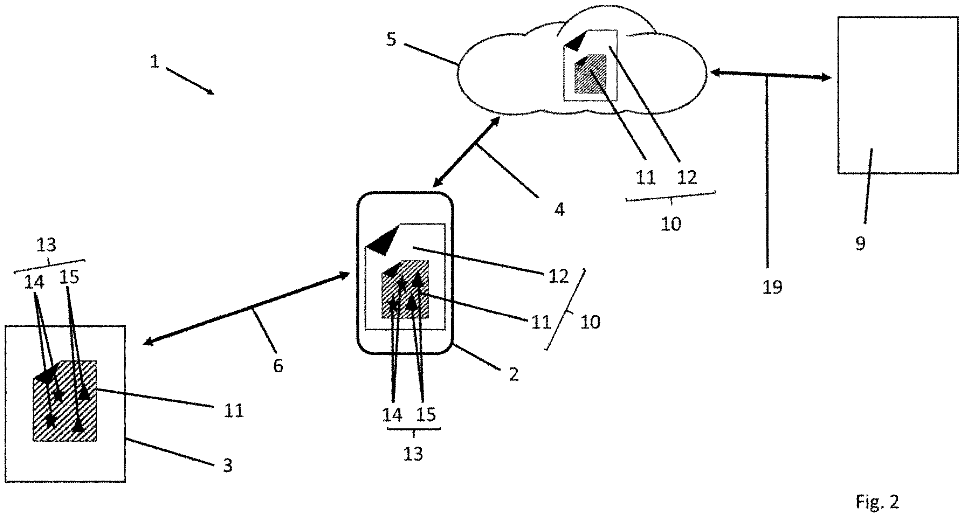

Die Zugangsinformation 10 umfasst einen verschlüsselten Anteil 11 und einen lesbaren Anteil 12. Ist die Zugangsinformation 10 für die mobile Vorrichtung 2 bestimmt, so kann die mobile Vorrichtung 2 die Zugangsinformation 10 aus der Cloud 5 abrufen. Die Abrufmöglichkeit für die mobile Vorrichtung 2 beschränkt sich hierbei auf die für die mobile Vorrichtung 2 vorgesehene Zugangsinformation 10. Die Zugangsinformation 10 ist zudem spezifisch für die Zugangskontrollvorrichtung 3. D. h. die Zugangsinformation 10 enthält Informationen, die der Gewährung des Zugangs zu dem von der spezifischen Zugangskontrollvorrichtung 3 bewachten physischen Bereichs vorgesehen sind. Die Zugangsinformation ist der Zugangskontrollvorrichtung 3 anhand einer Zugangskontrollvorrichtungskennung zugeordnet. Die Zugangsinformation umfasst die Zugangskontrollvorrichtungskennung. Kann dem Benutzer mittels der mobile Vorrichtung 2 Zugang zu mehreren physischen Bereichen, die von unterschiedlichen Zugangskontrollvorrichtungen 3 bewacht werden, gewährt werden, so enthält die mobile Vorrichtung 2 mehrere Zugangsinformationen 10. Insbesondere kann für jede der Zugangskontrollvorrichtungen 3 jeweils eine Zugangsinformation 10 in der mobilen Vorrichtung 2 vorgesehen und hinterlegt sein. In Figur 2 ist rein schematisch eine Zugangsinformation 10 für die abgebildete Zugangskontrollvorrichtung 3 in der mobilen Vorrichtung 2 hinterlegt.

Die Zugangsinformation 10 wird der Cloud 5 durch eine rein schematisch dargestellte Zugangsverwaltungsvorrichtung 9 zur Verfügung gestellt. Die Zugangsverwaltungsvorrichtung 9 kann Teil des erfindungsgemäßen Zugangskontrollsystems 1 sein. Die Zugangsverwaltungsvorrichtung 9 oder die Cloud 5 verschlüsselt den verschlüsselten Anteil 11 der Zugangsinformation 10 derart, dass die mobile Vorrichtung 2 nicht in der Lage ist, den verschlüsselten Anteil 11 zu entschlüsseln. Der verschlüsselte Anteil 11 ist dazu vorgesehen, zumindest teilweise von der mobilen Vorrichtung 2 auf die Zugangskontrollvorrichtung 3 übertragen zu werden. Die Zugangskontrollvorrichtung 3 kann den verschlüsselten Anteil 11 entschlüsseln.

Die Zugangsverwaltungsvorrichtung 9 kann über eine Kommunikationsverbindung 19 mit der Cloud 5 kommunizieren.

Die Cloud 5 kann Teil des Zugangskontrollsystems 1 sein. Alternativ ist die Cloud 5 nicht Teil des erfindungsgemäßen Zugangskontrollsystems 1. Vielmehr kann die mobile Vorrichtung 2 derart ausgebildet sein, dass die Zugangsinformation 10 von der mobile Vorrichtung 2 aus der Cloud 5 abrufbar ist. Die Zugangsverwaltungsvorrichtung 9 kann derart ausgebildet sein, dass die Zugangsinformation 10 von der Zugangsverwaltungsvorrichtung 9 in der Cloud 5 hinterlegbar ist.

In einer nicht dargestellten Alternative kann die Zugangsverwaltungsvorrichtung 9 über das Telekommunikationsnetz 4 die Zugangsinformation an die mobile Vorrichtung 2 senden, ohne dass eine Hinterlegung in der Cloud 5 erfolgt.

Das erfindungsgemäße Zugangskontrollsystem 1 kann insbesondere auf eine Anbindung der Zugangskontrollvorrichtung 3 an das Telekommunikationsnetz 4 und/oder auf eine kabelgebundene Anbindung an die Zugangsverwaltungsvorrichtung 9 verzichten. Somit kann die Zugangskontrollvorrichtung 3 als eine Stand-alone/Offline Vorrichtung ausgebildet sein.

Der verschlüsselte Anteil 11 wird von der Zugangskontrollvorrichtung 3 mittels der Sende- und Empfangseinheit 20 und über die Kommunikationsschnittstelle 28 empfangen.

Der verschlüsselte Anteil 11 enthält Zugangsattribute 13. Einige Zugangsattribute 13 sind als Regel oder als Daten für eine Regel 14 ausgebildet. Die als Regel oder als Daten für eine Regel 14 ausgebildete Zugangsattribute 13 sind in Figur 2 rein schematisch als ein Stern gekennzeichnet.

Einige Zugangsattribute 13 sind als Anweisung oder als Daten für eine Anweisung 15 ausgebildet. Die Art und Weise des Zugangs wird durch zumindest eine Anweisung bestimmt. Die Anweisung kann umfassen, wie die Gewährung des Zugangs visuell und/oder akustisch in der Zugangskontrollvorrichtung 3 angezeigt wird. Alternativ oder zusätzlich kann die Anweisung umfassen, wie die Gewährung des Zugangs beendet wird, z. B. nach einer vorbestimmten Zeitspanne nach Beginn der Gewährung, an einem vorbestimmten Zeitpunkt unabhängig von dem Beginn der Gewährung oder nach einer Anzahl der erfolgten Gewährungen. Die Anweisung kann ebenfalls umfassen, ob Informationen über die Gewährung des Zugangs gespeichert oder an die mobile Vorrichtung 2 gesendet werden. Die als Anweisung oder als Daten für eine Anweisung 15 ausgebildeten Zugangsattribute sind in Figur 2 rein schematisch als Dreieck dargestellt. Aus Gründen der Übersichtlichkeit ist in dem verschlüsselte Anteil 11, der in der Cloud 5 hinterlegt ist, kein Zugangsattribut 13 eingezeichnet. Der verschlüsselte Anteil 11, der in der Cloud 5 hinterlegt ist, enthält jedoch auch die Zugangsattribute 13.

Die Zugangsattribute 13 werden in dem aktuellen Zugangskontrollverfahren 100 verwendet. Hierdurch werden stets aktuelle Zugangsattribute ermöglicht.

Zusätzlich oder alternativ zu den Anweisungen 15, die in dem verschlüsselten Anteil 11 enthalten und über die Kommunikationsschnittstelle 28 empfangen werden, können Anweisungen zur Art und Weise der Gewährung des Zugangs von der Zugangskontrollvorrichtung 3 über die Sende- und Empfangseinheit 20 und über die Programmierschnittstelle 8 empfangen werden. Es kann auch sein, dass Steuerbefehle zur Aktivierung einer in der Zugangskontrollvorrichtung 3 hinterlegten Anweisung über die Programmierschnittstelle 8 empfangen werden.

Weitere Daten, die über die Programmierschnittstelle 8 empfangen werden können, sind: eine aktualisierte Fassung einer Firmware und/oder eine zusätzliche Firmware, eine aktualisierte Fassung der Zugangskontrollvorrichtungskennung, eine aktualisierte Fassung zumindest eines Voreinstellungsattributs, bevorzugt mehrerer Voreinstellungsattribute, eine Sperrliste und/oder eine aktualisierte Fassung von Daten, um eine Entschlüsselung durchzuführen, insbesondere die Entschlüsselung des verschlüsselten Anteils 11.

Ebenfalls kann es sein, dass die Programmierschnittstelle 8 Daten für den weiteren Verlauf des Zugangskontrollverfahrens 100, 200, 300 von der mobilen Vorrichtung 2 empfängt. Z. B. können Daten für die weitere Authentifizierung und/oder das positive Ergebnis einer Überprüfung einer in der mobilen Vorrichtung 2 zu überprüfenden Regel über die Programmierschnittstelle 8 empfangen werden. Hierzu wird die Programmierschnittstelle 8 zumindest teilweise geöffnet, bevor Zugang zu dem physischen Bereich gewährt wird.

Ebenfalls ist es denkbar, dass die Programmierschnittstelle 8 einen Öffnungsbefehl von der mobilen Vorrichtung 2 erhält. Die mobile Vorrichtung 2 versendet den Öffnungsbefehl, nachdem die mobile Vorrichtung 2 die Gewährung des Zugangs beschlossen hat. Der Öffnungsbefehl verursacht, dass die elektromechanische Vorrichtung 7 zur Gewährung des Zugangs arbeitet.

Die Zugangskontrollvorrichtung 3 kann die Programmierschnittstelle 8 nur teilweise öffnen.

So kann die Zugangskontrollvorrichtung 3 von der mobilen Vorrichtung 2 einen Befehl oder Daten für einen Befehl zur Öffnung der Programmierschnittstelle 8 empfangen. Der Befehl lautet, die Programmierschnittstelle nur teilweise zu öffnen. Der Befehl umfasst hierbei, für welche Daten die Programmierschnittstelle zu öffnen ist. Der Befehl oder die Daten für den Befehl werden verschlüsselt von der mobilen Vorrichtung 2 an die Zugangskontrollvorrichtung 3 gesendet.

Alternativ ist ein Algorithmus in der Zugangskontrollvorrichtung 3 hinterlegt, nach welcher Überprüfung einer Regel die Programmierschnittstelle 8 für welche Daten zumindest teilweise zu öffnen ist. In diesem Fall bedarf es keinen besonderen Befehls, um die Programmierschnittstelle 8 zumindest teilweise zu öffnen.

Die Zugangskontrollvorrichtung 3 schließt die Programmierschnittstelle 8 nach einer vorgegebenen Zeitdauer wieder.

Die Zugangskontrollvorrichtung 3 sendet den Ausgang des Zugangskontrollverfahrens zur Gewährung des Zugangs zu dem physischen Bereich und/oder von Merkmalen des Zugangskontrollverfahrens an die mobile Vorrichtung, nachdem ein Aufforderungsbefehl zum Senden des Ausgangs des Zugangskontrollverfahrens und/oder der Merkmale des Zugangskontrollverfahrens der mobilen Vorrichtung 2 von der Zugangskontrollvorrichtung 3 empfangen wurde.

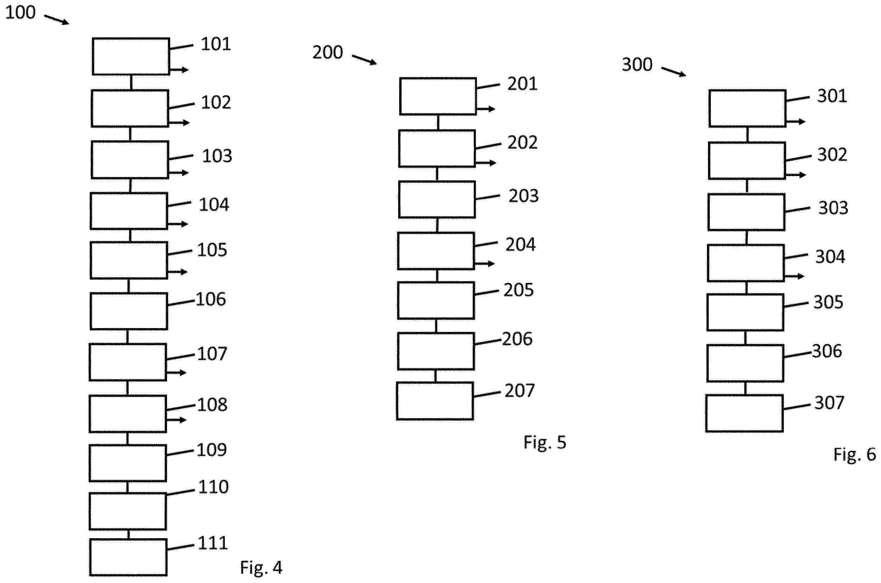

In den Figuren 4, 5 und 6 sind mehrere erfindungsgemäße Verfahren 100, 200, 300 dargestellt. Hierbei dient das erfindungsgemäße Verfahren 100, 200, 300 sowohl als ein Verfahren zur Übermittlung von Daten von der mobilen Vorrichtung 2 an die erfindungsgemäße Zugangskontrollvorrichtung 3 als auch als ein Zugangskontrollverfahren 100, 200, 300, so dass dieselben Bezugszeichen für das gemeinsame Verfahren 100, 200, 300 verwendet werden. Das Verfahren zur Übermittlung von Daten von der mobilen Vorrichtung 2 an die Zugangskontrollvorrichtung 3 ist Teil des Zugangskontrollverfahrens 100, 200, 300.

Zu Beginn der Verfahren 100, 200, 300 ist jeweils die Programmierschnittstelle 8 geschlossen.

In einem ersten Verfahrensschritt 101 des erfindungsgemäßen Verfahrens 100 wird eine Zugangskontrollvorrichtungskennung von der Zugangskontrollvorrichtung 3 an die mobile Vorrichtung 2 gesendet.

Die mobile Vorrichtung 2 überprüft daraufhin in einem zweiten Verfahrensschritt 102 des Verfahrens 100, ob eine Zugangsinformation 10, die anhand der Zugangskontrollvorrichtungskennung als zu der Zugangskontrollvorrichtung 3 zugehörig identifizierbar ist, in der mobilen Vorrichtung 2 hinterlegt ist. Ist eine derartige Zugangsinformation 10 hinterlegt, so sendet die mobile Vorrichtung 2 den verschlüsselten Anteil 11 derjenigen Zugangsinformation 10, die als zu der Zugangskontrollvorrichtung 3 zugehörig identifiziert wurde, an die Zugangskontrollvorrichtung 3. Dieses ist insbesondere in Figur 2 dargestellt. Ist eine entsprechende Zugangsinformation 10 für die Zugangskontrollvorrichtung 3 in der mobilen Vorrichtung 2 nicht hinterlegt, so endet das Verfahren 100. Dieses wird durch einen Pfeil an dem zweiten Verfahrensschritt 102 in Figur 3 verdeutlicht.

In dem Verfahrensschritt 101 kann es vorgesehen sein, dass der Benutzer an der mobilen Vorrichtung 2 eine Eingabe, z. B. Drücken eines Knopfs oder Starten einer App, vornehmen muss, mit der der Benutzer den Willen zum Zugang bekundet. Fehlt die Eingabe, so kann das Verfahren 100 beendet sein. Dieses wird durch einen Pfeil an dem ersten Verfahrensschritt 101 in Figur 3 verdeutlicht.

Teil des ersten Verfahrensschritts 101 kann zusätzlich oder alternativ sein, dass die mobile Vorrichtung 2 dem Benutzer alle Zugangskontrollvorrichtungen 3, mit denen die mobile Vorrichtung 2 kommunizieren kann, insbesondere deren Zugangskontrollvorrichtungskennung die mobile Vorrichtung 2 empfangen hat und zu denen eine Zugangsinformation 10 in der mobilen Vorrichtung 2 hinterlegt ist, auf dem Display 18 anzeigt. Die Anzeige der Zugangskontrollvorrichtungen 3 wird durch die Informationen, die in dem jeweilige lesbaren Anteil 12 des Zugangsinformationen 10 zu den entsprechenden Zugangskontrollvorrichtungen 3 enthalten sind, unterstützt. So kann der lesbare Anteil 12 ein Bild oder eine Beschreibung der möglichen Zugangskontrollvorrichtungen 3, der möglichen physischen Räume und/oder der Barrieren, die von den möglichen Zugangskontrollvorrichtungen 3 bewacht werden, umfassen. Die entsprechenden Bilder und/oder Beschreibungen können auf dem Display 18 der mobilen Vorrichtung 2 angezeigt werden. Der Benutzer kann anhand der angezeigten Information eine der Zugangskontrollvorrichtungen 3 auswählen. Die mobile Vorrichtung 2 sendet dann in dem Verfahrensschritt 102 nur an die ausgewählte Zugangskontrollvorrichtung 3 die dazugehörige Zugangsinformation 10, insbesondere den verschlüsselten Anteil 11.

Der in dem Verfahrensschritt 102 empfangene verschlüsselte Anteil 11 wird von der Zugangskontrollvorrichtung 3 in einem dritten Verfahrensschritt 103 des Verfahrens 100 entschlüsselt. Der verschlüsselte Anteil 11 enthält einen Vergleichswert.

Die mobile Vorrichtung 2 hat von der Zugangsverwaltungsvorrichtung 9, beispielsweise über die Cloud 5, einen Überprüfwert erhalten. Der Überprüfwert kann in dem lesbare Anteil 12 enthalten sein. Ebenfalls ist es denkbar, dass die mobile Vorrichtung 2 den Überprüfwert separat zu der Zugangsinformation 10 von der Zugangsverwaltungsvorrichtung 9 empfängt. Der Überprüfwert kann z. B. über die Cloud 5 von der mobilen Vorrichtung 2 heruntergeladen werden.

In einem vierten Verfahrensschritt 104 des Verfahrens 100 übermittelt die mobile Vorrichtung 2 an die Zugangskontrollvorrichtung 3 den Überprüfwert.

In einem fünften Verfahrensschritt 105 des Verfahrens 100 vergleicht die Zugangskontrollvorrichtung 3 den Vergleichswert mit dem Überprüfwert. Hierdurch überprüft die Zugangskontrollvorrichtung 3 eine Regel. Bei einem positiven Vergleich erkennt die Zugangskontrollvorrichtung 3 die mobile Vorrichtung 2 als prinzipiell berechtigt an und das Verfahren 100 wird fortgesetzt.

Wird der Vergleichswert oder/und der Überprüfwert in dem aktuellen Verfahren 100 nicht übermittelt oder fällt der Vergleich zwischen dem Vergleichswert und dem Überprüfwert negativ aus, so bleibt der Zugang verwehrt und die Programmierschnittstelle 8 geschlossen. Das Verfahren 100 endet. Dieses wird durch Pfeile an den Verfahrensschritten 103, 104 und 105 in Figur 4 dargestellt.

Fällt der Vergleich zwischen dem Vergleichswert und/oder dem Überprüfwert positiv aus, so wird in einem Verfahrensschritt 106 die Programmierschnittstelle 8 unmittelbar geöffnet. Hierdurch ist es der Zugangskontrollvorrichtung 3 möglich, weitere Daten für das Zugangskontrollverfahren 100 über die Programmierschnittstelle 8 zu empfangen.

So kann die Zugangskontrollvorrichtung 3 in einem siebten Verfahrensschritt 107 mittels der Programmierschnittstelle 8 einen PIN-Code für eine weitere Authentifizierung von der mobilen Vorrichtung 2 empfangen und die weitere Authentifizierung durchführen. Wird der PIN-Code nicht empfangen, so endet das Verfahren 100 ohne Gewährung des Zugangs. Dieses wird durch einen Pfeil an den Verfahrensschritten 107 in Figur 4 dargestellt.

In einem achten Verfahrensschritt 108 kann die Zugangskontrollvorrichtung 3 innerhalb eines vorgegebenen Zeitrahmens über die Programmierschnittstelle 8 ein positives Ergebnis einer in der mobilen Vorrichtung 2 zu überprüfenden Regel empfangen.

Als zu überprüfende Regel kann die mobile Vorrichtung 2 den Benutzer auffordern, per Eingabe an der mobilen Vorrichtung 2 eine Benutzungsordnung wie "dieses ist ein Nichtraucherzimmer" zu akzeptieren. Zusätzlich oder alternativ kann die mobile Vorrichtung 2 den erfolgreichen Abschluss einer Sicherheitsunterweisung überprüfen. Hierzu kann die mobile Vorrichtung 2 einen Test durchführen und auswerten. Zusätzlich oder alternativ kann die mobile Vorrichtung 2 den Zugang nur gewähren, wenn zuvor ein anderer Zugang gewährt wurde. Hierbei kann es sein, dass der Benutzer zunächst einen weiteren physischen Bereich, z. B. eine Schleuse oder einen Reinraum, durchqueren muss, bevor dem Benutzer der aktuell gewünschte Zugang gewährt wird. Die mobile Vorrichtung 2 überprüft somit eine Aufenthaltshistorie der mobilen Vorrichtung 2. Die mobile Vorrichtung 2 kann auch überprüfen, ob zuvor eine Zahlung zur Nutzung des physischen Bereichs geleistet wurde. Ebenfalls kann zumindest eine der Regeln b, c. oder d. in der mobilen Vorrichtung 2 zur Gewährung des Zugangs überprüft werden.

Verstreicht der vorgegebene Zeitrahmen, ohne dass ein positives Ergebnis der in der mobilen Vorrichtung 2 zu überprüfenden Regel empfangen wurde, so wird das Verfahren 100 beendet. Empfängt die Zugangskontrollvorrichtung 8 das positive Ergebnis innerhalb des Zeitrahmens, so wird das Verfahren 100 fortgesetzt. Dieses wird durch einen Pfeile an den Verfahrensschritten 108 in Figur 4 dargestellt.

In einem neunten Verfahrensschritt 109 stellt die Zugangskontrollvorrichtung 3 fest, dass alle zur Gewährung eines Zugangs zu überprüfenden Regeln mit positiven Ergebnis überprüft wurden und wartet eine vorgegebene Zeitdauer ab, ob ein Steuerbefehl oder eine Anweisung über die Programmierschnittstelle 8 empfangen wurde. In diesem Fall gewährt die Zugangskontrollvorrichtung 3 den Zugang gemäß dem Steuerbefehl oder eine Anweisung, die über die Programmierschnittstelle 8 empfangen wurde. Wird innerhalb der vorgegebenen Zeitdauer kein Steuerbefehl oder keine Anweisung empfangen, so gewährt die Zugangskontrollvorrichtung 3 den Zugang gemäß Anweisungen 15 des verschlüsselten Anteils 11 und/oder gemäß in der Zugangskontrollvorrichtung 3 hinterlegten als Anweisung ausgebildeten Voreinstellungsattributen. Zur Gewährung des Zugangs wird die elektromechanische Vorrichtung 7 zur Kopplung angesteuert.

In einem zehnten Verfahrensschritt 110 schließt die Zugangskontrollvorrichtung 3 die Programmierschnittstelle 8. In einem elften Verfahrensschritt 111 beendet die Zugangskontrollvorrichtung 3 das Verfahren 100. Hierbei wird der Zugang erneut verwehrt.

Dazu steuert der Controller der Zugangskontrollvorrichtung 3 die elektromechanische Vorrichtung 7 zur Entkopplung an.

Alternative Verfahren, in denen ein oder zwei der Verfahrensschritte 107, 108 und/oder 109 fehlen, sind möglich.

Der verschlüsselte Anteil 11 wird in der Zugangskontrollvorrichtung 3 nach Beendigung des Verfahrens 100 nicht gespeichert. Somit wird gewährleistet, dass stets ein aktueller verschlüsselter Anteil 11, der von der mobilen Vorrichtung 2 während des Verfahrens 100 übertragen wird, verwendet wird. Fehlt die Übertragung des verschlüsselten Anteils 11, so wird das Verfahren 100 beendet.

In Figur 5 ist ein weiteres erfindungsgemäßes Verfahren 200 dargestellt. Das Verfahren 200 kann mittels des erfindungsgemäßen Zugangskontrollsystems 1 und des erfindungsgemäße Zugangskontrollvorrichtung 3 der Figuren 1, 2 und 3 durchgeführt werden. Der erste, zweite, und dritte Verfahrensschritt 101, 102, 103 des Verfahrens 100 aus Figur 4 entspricht dem ersten, zweiten und dritten Verfahrensschritt 201, 202, 203 des Verfahrens 200 aus Figur 5.

In einem vierten Verfahrensschritt 204 werden Regeln, insbesondere die Regeln a., b., c. und/oder d., in der Zugangskontrollvorrichtung 3 überprüft. Wird eine der Überprüfungen mit einem negativen Ergebnis beendet, so endet das Verfahren 200. Dieses wird durch einen Pfeil an dem Verfahrensschritt 204 in Figur 5 verdeutlicht.

Werden alle zu überprüfenden Regeln mit einem positiven Ergebnis überprüft, so wird das Verfahren fortgesetzt und die Zugangskontrollvorrichtung 3 gewährt in einem fünften Verfahrensschritt 205 den Zugang zu dem physischen Bereich, indem die elektromechanische Vorrichtung 7 angesteuert wird. Zudem wird in dem fünften Verfahrensschritt 205 eine Anweisung 15 durchgeführt, mit dem die Gewährung des Zugangs visuell anzeigt wird. Hierzu wird die Lichtquelle 26 hinter dem Lichtleiter 16 angesteuert. Die Anweisung 15 ist in dem verschlüsselten Anteil 11 enthalten.

In einem sechsten Verfahrensschritt 206 wird die Programmierschnittstelle 8 teilweise geöffnet. Die Programmierschnittstelle 8 wird nur zum Empfang einer aktualisierten Fassung von Voreinstellungsattributen geöffnet. Ansonsten bleibt die Programmierschnittstelle 8 geschlossen. Die Zugangskontrollvorrichtung 3 wartet eine vorgegebene Zeitdauer, dass Voreinstellungsattribute verschlüsselt von der mobilen Vorrichtung 2 übermittelt werden. Werden die Voreinstellungsattribute innerhalb der vorgegebenen Zeitdauer übermittelt, so speichert die Zugangskontrollvorrichtung 3 die Voreinstellungsattribute zur Verwendung in zukünftigen Verfahren. Fehlt eine Übermittlung der Voreinstellungsattribute innerhalb der vorgegebenen Zeitdauer, so unterbleibt ein Empfang der Voreinstellungsattribute durch die Programmierschnittstelle 8. Die Zugangskontrollvorrichtung 3 schließt die Programmierschnittstelle 8 nach der vorgegebenen Zeitdauer.

In einem siebten Verfahrensschritt 207 wird der Zugang zu dem physischen Bereich beendet. Hierzu umfasst der verschlüsselte Anteil 11 eine vorbestimmte Zeitspanne. Die Zeitspanne gibt an, wann der Zugang nach Beginn der Gewährung des Zugangs wieder zu verwehren ist. Die Zeitspanne wurde der Zugangskontrollvorrichtung 3 in dem verschlüsselten Anteil 11 übermittelt. Mittels des Timers ermittelt die Zugangskontrollvorrichtung 3 die Zeitspanne, die seit Gewährung des Zugangs in Schritt 205 verstrichen ist. Entspricht die ermittelte Zeitspanne der vorbestimmten Zeitspanne, so steuert der Controller der Zugangskontrollvorrichtung 3 die elektromechanische Vorrichtung 7 an. Hieraufhin wird durch die elektromechanische Vorrichtung 7 der Zugang verwehrt. Z. B. entkuppelt die elektromechanischen Vorrichtung 7 die Handhabe 17 von einem Schloss, so dass ein Drehmoment der Handhabe 17 nicht mehr auf das Schloss übertragbar ist. Danach endet das Verfahren 200.

In Figur 6 ist ein weiteres erfindungsgemäßes Verfahren 300 dargestellt. Das Verfahren 300 kann mittels des erfindungsgemäßen Zugangskontrollsystems 1 und des erfindungsgemäße Zugangskontrollvorrichtung 3 der Figuren 1, 2 und 3 durchgeführt werden. Der erste, zweite, dritte, vierte, fünfte und siebten Verfahrensschritt 201, 202, 203, 204, 205, 207 des Verfahrens 200 aus Figur 5 entspricht dem ersten, zweiten, dritten, vierten, fünften und siebten Verfahrensschritt 301, 302, 303, 304, 305, 307 des Verfahrens 300 aus Figur 6.

Wird der Zugang gewährt, so überprüft die Zugangskontrollvorrichtung 3 in einem Schritt 306, ob ein Befehl zum teilweise Öffnen der Programmierschnittstelle zum Empfang einer aktualisierten Fassung einer Firmware, der Zugangskontrollvorrichtungskennung und/oder Daten zur Durchführung einer Entschlüsselung vorliegt. In einer Ausführungsform des Verfahrens 300 umfasst der verschlüsselte Anteil 11 den entsprechenden Befehl. In einer alternativen Ausführungsform übermittelt die mobile Vorrichtung 2 den Befehl, der nicht in dem verschlüsselten Anteil 11 enthalten ist. Ist der Zugang gewährt worden und liegt der entsprechende Befehl vor, so öffnet die Zugangskontrollvorrichtung 3 die Programmierschnittstelle 8. Die Zugangskontrollvorrichtung 3 wartet eine vorgegebene Zeitdauer, dass die aktualisierte zu übermittelnde Fassung einer Firmware, der Zugangskontrollvorrichtungskennung und/oder Daten zur Durchführung einer Entschlüsselung verschlüsselt von der mobilen Vorrichtung 2 übermittelt werden. Wird die die aktualisierte zu übermittelnde Fassung einer Firmware, der Zugangskontrollvorrichtungskennung und/oder Daten zur Durchführung einer Entschlüsselung innerhalb der vorgegebenen Zeitdauer übermittelt, so speichert die Zugangskontrollvorrichtung 3 die aktualisierte zu übermittelnde Fassung einer Firmware, der Zugangskontrollvorrichtungskennung und/oder Daten zur Durchführung einer Entschlüsselung zur Verwendung in zukünftigen Verfahren. Fehlt eine Übermittlung die aktualisierte zu übermittelnde Fassung einer Firmware, der Zugangskontrollvorrichtungskennung und/oder Daten zur Durchführung einer Entschlüsselung innerhalb der vorgegebenen Zeitdauer, so unterbleibt ein Empfang der die aktualisierte zu übermittelnde Fassung durch die Programmierschnittstelle 8. Die Zugangskontrollvorrichtung 3 schließt die Programmierschnittstelle 8 nach der vorgegebenen Zeitdauer.

In einer Alternative zu Schritt 306 reicht es nicht aus, dass die mobile Vorrichtung 2 den Befehl an die Zugangskontrollvorrichtung 3 sendet. Vielmehr muss, obwohl bereits Zugang gewährt wurde, noch eine weitere Regel überprüft werden, um die Programmierschnittstelle 8 öffnen zu können. Erst bei einem positiven Ergebnis der Überprüfung der weiteren Regel kann die Programmierschnittstelle 8 geöffnet werden. Die weitere Regel kann in der mobilen Vorrichtung 2 oder in der Zugangskontrollvorrichtung 3 überprüft werden.

## Patentansprüche

1. Zugangskontrollvorrichtung (3) für ein Zugangskontrollsystem (1),
wobei die Zugangskontrollvorrichtung (3) zur Zuordnung zu einem physischen Bereich, zu dem mittels der Zugangskontrollvorrichtung (3) Zugang gewährbar ist, ausgebildet ist,
**dadurch gekennzeichnet,**
**dass** die Zugangskontrollvorrichtung (3) eine Programmierschnittstelle (8) umfasst, wobei die Programmierschnittstelle (8) dazu dient, drahtlos mit einer mobilen Vorrichtung (2) zu kommunizieren und die Zugangskontrollvorrichtung (3) über die Programmierschnittstelle (8) zumindest eine, bevorzugt mehrere der folgenden Daten, empfängt:
i. eine aktualisierte Fassung einer Firmware und/oder eine zusätzliche Firmware
ii. eine aktualisierte Fassung einer Zugangskontrollvorrichtungskennung,
iii. eine aktualisierte Fassung zumindest eines Voreinstellungsattributs, bevorzugt mehrerer Voreinstellungsattribute,
iv. eine aktualisierte Fassung von Daten, um eine Entschlüsselung durchführen zu können,
v. zumindest ein Steuerbefehl zum Ansteuern der Zugangskontrollvorrichtung (3),
wobei die Zugangskontrollvorrichtung (3) die Programmierschnittstelle (8) infolge einer Kommunikation mit der mobilen Vorrichtung (2) zumindest teilweise öffnet.

2. Zugangskontrollvorrichtung (3) nach Anspruch 1, **dadurch gekennzeichnet, dass** die Kommunikation zur Gewährung eines Zugangs zu dem physischen Bereich erfolgt.

3. Zugangskontrollvorrichtung (3) nach Anspruch 1 oder 2, **dadurch gekennzeichnet, dass** die Zugangskontrollvorrichtung (3) die Programmierschnittstelle (8) in Folge eines positiven Ergebnisses einer Überprüfung zumindest einer Regel, die in der Zugangskontrollvorrichtung (3) stattfindet, zumindest teilweise öffnet, wobei insbesondere die Überprüfung der Regel zur Gewährung des Zugangs zu dem physischen Bereich erfolgt.

4. Zugangskontrollvorrichtung (3) nach Anspruch 3, **dadurch**
**gekennzeichnet, dass** die Regel, die in der Zugangskontrollvorrichtung (3) zur zumindest teilweise Öffnung der Programmierschnittstelle (8) und/oder zur Gewährung des Zugangs zu überprüfen ist, einer der folgenden Regeln entspricht oder umfasst:
a. Es ist ein Vergleichswert mit einem Überprüfwert zu vergleichen,
b. es ist zu überprüfen, ob eine aktuelle Zeit sich in einem vorgegebenen Zeitbereich befindet,
c. eine weitere Authentifizierung, insbesondere mittels eines Codes oder einer biometrischen Erkennung, ist vorzunehmen,
d. eine Kennzeichnung, die den Benutzer als einen Wächter kenntlich macht, ist zu überprüfen,
e. ein positives Ergebnis einer Regel, die in der mobilen Vorrichtung zu prüfen ist, muss vorliegen,
wobei insbesondere die Regel b., c., d. und/oder e. nur in einem vorgegebenen Zeitfenster gilt.

5. Zugangskontrollvorrichtung (3) nach Anspruch 3 oder 4, **dadurch gekennzeichnet, dass** die Zugangskontrollvorrichtung (3) von der mobilen Vorrichtung (2) Daten für die zumindest eine Regel und/oder die zumindest eine Regel empfängt, insbesondere dass die Zugangskontrollvorrichtung (3) die empfangenen Daten für die zumindest eine Regel und/oder die empfangene zumindest eine Regel nur zur aktuellen Gewährung des Zugangs zu dem physischen Bereich und/oder zur aktuellen Öffnung der Programmierschnittstelle verwendet.

6. Zugangskontrollvorrichtung (3) nach einem der vorhergehenden Ansprüche, **dadurch gekennzeichnet, dass** die Zugangskontrollvorrichtung (3) die Programmierschnittstelle (8) zumindest teilweise öffnet, bevor die Zugangskontrollvorrichtung (3) Zugang zu dem physischen Bereich gewährt hat.

7. Zugangskontrollvorrichtung (3) nach einem der vorhergehenden Ansprüche, **dadurch gekennzeichnet, dass** unterschiedliche Teile der Programmierschnittstelle (8) von der Zugangskontrollvorrichtung (3) öffenbar sind, insbesondere dass der Teil der Programmierschnittstelle (8), der geöffnet wird, von einem von der mobilen Vorrichtung (2) empfangenen Befehl oder Daten für einen Befehl abhängt, wobei der Befehl umfasst, für welcher Teil der Programmierschnittstelle (8) zu öffnen ist.

8. Zugangskontrollvorrichtung (3) nach einem der vorhergehenden Ansprüche, **dadurch gekennzeichnet, dass** die Zugangskontrollvorrichtung (3) die Programmierschnittstelle (8) nach einer vorgegebenen Zeitdauer schließt.

9. Zugangskontrollvorrichtung (3) nach einem der vorhergehenden Ansprüche, **dadurch gekennzeichnet, dass** die Zugangskontrollvorrichtung (3) den Ausgang eines Zugangskontrollverfahrens zur Gewährung des Zugangs zu dem physischen Bereich und/oder von Merkmalen des Zugangskontrollverfahrens, insbesondere von über die Programmierschnittstelle empfangene Steuerbefehlen, an die mobile Vorrichtung (2) sendet, nachdem ein Aufforderungsbefehl zum Senden des Ausgangs des Zugangskontrollverfahrens und/oder der Merkmale des Zugangskontrollverfahrens der mobilen Vorrichtung von der Zugangskontrollvorrichtung empfangen wurde, wobei insbesondere ein Benutzer willentlich den Aufforderungsbefehl initiiert.

10. Zugangskontrollsystem (1)
mit einer Zugangskontrollvorrichtung (3) nach einem der vorhergehenden Ansprüche 1 bis 9 und mit einer mobilen Vorrichtung (2), die zur drahtlosen Kommunikation mit der Zugangskontrollvorrichtung (3) über die Programmierschnittstelle (8) ausgebildet ist.

11. Zugangskontrollsystem (1) nach Anspruch 10, **dadurch gekennzeichnet, dass**
die mobile Vorrichtung (2) eine Zugangsinformation (10) umfasst, wobei die Zugangsinformation (10) einen verschlüsselten Anteil (11), der von der mobilen Vorrichtung (2) unentschlüsselbar ist, umfasst, wobei insbesondere der verschlüsselte Anteil (11) ein zu übermittelndes Zugangsattribut (13, 14, 15), insbesondere eine zu überprüfende Regel (14) oder Daten für eine zu überprüfende Regel (14), umfasst.

12. Zugangskontrollsystem (1) nach Anspruch 10 oder 11, **dadurch gekennzeichnet, dass** die mobile Vorrichtung (2) eine Regel zur Gewährung des Zugangs zu dem physischen Bereich überprüft, und die Zugangskontrollvorrichtung (3) das Ergebnis der Überprüfung über die Programmierschnittstelle (8) erhält.

13. Verfahren (100, 200, 300) zur Übermittlung von Daten von einer mobilen Vorrichtung (2) an eine Zugangskontrollvorrichtung (3), insbesondere nach einem der Ansprüche 1 bis 9,
wobei die Zugangskontrollvorrichtung (3) zur Zuordnung zu einem physischen Bereich, zu dem mittels der Zugangskontrollvorrichtung (3) Zugang gewährbar ist, ausgebildet ist, wobei die Zugangskontrollvorrichtung (3) eine Programmierschnittstelle (8) umfasst,
**dadurch gekennzeichnet, dass**
dass die Zugangskontrollvorrichtung (3) die Programmierschnittstelle (8) verwendet, um Daten drahtlos von der mobilen Vorrichtung (2) zu empfangen, und die Zugangskontrollvorrichtung (3) über die Programmierschnittstelle (8) zumindest eine, bevorzugt mehrere der folgenden Daten, empfängt:
i. eine aktualisierte Fassung einer Firmware und/oder eine zusätzliche Firmware
ii. eine aktualisierte Fassung einer Zugangskontrollvorrichtungskennung,
iii. eine aktualisierte Fassung zumindest eines Voreinstellungsattributs, bevorzugt mehrerer Voreinstellungsattribute,
iv. eine aktualisierte Fassung von Daten, um eine Entschlüsselung durchführen zu können,
v. zumindest ein Steuerbefehl zum Ansteuern der Zugangskontrollvorrichtung (3), wobei die Zugangskontrollvorrichtung (3) die Programmierschnittstelle (8) infolge einer Kommunikation mit der mobilen Vorrichtung (2) zumindest teilweise öffnet.

## Claims

1. An access control device (3) for an access control system (1),
wherein the access control device (3) is designed to be assigned to a physical region to which access can be granted by means of the access control device (3),
**characterised,**
**in that** the access control device (3) comprises a programming interface (8), wherein the programming interface (8) serves to communicate wirelessly with a mobile device (2) and the access control device (3) receives at least one, preferably a plurality, of the following data via the programming interface (8):
i. an updated version of a firmware and/or an additional firmware
ii. an updated version of an access control device identifier,
iii. an updated version of at least one default attribute, preferably a plurality of default attributes,
iv. an updated version of data in order to be able to carry out decryption,
v. at least one control command for actuating the access control device (3),
wherein the access control device (3) at least partially opens the programming interface (8) as a result of communication with the mobile device (2).

2. The access control device (3) according to claim 1, **characterised in that** the communication is carried out to grant access to the physical region.

3. The access control device (3) according to claim 1 or 2, **characterised in that** the access control device (3) at least partially opens the programming interface (8) as a result of a positive result of a check of at least one rule which takes place in the access control device (3), wherein in particular the check of the rule takes place for granting access to the physical region.

4. The access control device (3) according to claim 3, **characterised in that** the rule which is to be checked in the access control device (3) for at least partially opening the programming interface (8) and/or for granting access corresponds to or comprises one of the following rules:
a. a reference value must be compared with a check value,
b. it must be checked whether a current time is within a specified time range,
c. further authentication, in particular by means of a code or biometric recognition, must be carried out,
d. a marking identifying the user as a guard must be checked,
e. a positive result of a rule to be checked in the mobile device must be present,
wherein in particular rules b., c., d. and/or e. only apply within a given time window.

5. The access control device (3) according to claim 3 or 4, **characterised in that** the access control device (3) receives data for the at least one rule and/or the at least one rule from the mobile device (2), in particular **in that** the access control device (3) uses the received data for the at least one rule and/or the received at least one rule only for the current granting of access to the physical region and/or for the current opening of the programming interface.

6. The access control device (3) according to one of the preceding claims, **characterised in that** the access control device (3) at least partially opens the programming interface (8) before the access control device (3) has granted access to the physical region.

7. The access control device (3) according to one of the preceding claims, **characterised in that** different parts of the programming interface (8) can be opened by the access control device (3), in particular **in that** the part of the programming interface (8) that is opened depends on a command or data for a command received from the mobile device (2), wherein the command comprises which part of the programming interface (8) is to be opened.

8. The access control device (3) according to one of the preceding claims, **characterised in that** the access control device (3) closes the programming interface (8) after a predetermined period of time.

9. The access control device (3) according to one of the preceding claims, **characterised in that** the access control device (3) sends the output of an access control method for granting access to the physical region and/or features of the access control method, in particular control commands received via the programming interface, to the mobile device (2) after a request command for sending the output of the access control method and/or the features of the access control method of the mobile device has been received from the access control device, wherein in particular a user intentionally initiates the request command.

10. An access control system (1) with an access control device (3) according to one of the preceding claims 1 to 9 and with a mobile device (2) which is designed for wireless communication with the access control device (3) via the programming interface (8).

11. The access control system (1) according to claim 10, **characterised in that** the mobile device (2) comprises access information (10), wherein the access information (10) comprises an encrypted portion (11) which cannot be decrypted by the mobile device (2), wherein in particular the encrypted portion (11) comprises an access attribute (13, 14, 15) to be transmitted, in particular a rule (14) to be checked or data for a rule (14) to be checked.

12. The access control system (1) according to claim 10 or 11, **characterised in that** the mobile device (2) checks a rule for granting access to the physical region, and the access control device (3) receives the result of the check via the programming interface (8).

13. A method (100, 200, 300) for transmitting data from a mobile device (2) to an access control device (3), in particular according to one of claims 1 to 9,
wherein the access control device (3) is designed to be assigned to a physical region to which access can be granted by means of the access control device (3), wherein the access control device (3) comprises a programming interface (8),
**characterised**
**in that** that the access control device (3) uses the programming interface (8) to receive data wirelessly from the mobile device (2), and the access control device (3) receives at least one, preferably a plurality, of the following data via the programming interface (8):
i. an updated version of a firmware and/or an additional firmware
ii. an updated version of an access control device identifier,
iii. an updated version of at least one default attribute, preferably a plurality of default attributes,
iv. an updated version of data in order to be able to carry out decryption,
v. at least one control command for actuating the access control device (3),
wherein the access control device (3) at least partially opens the programming interface (8) as a result of communication with the mobile device (2).

## Revendications

1. Dispositif de contrôle d'accès (3) pour un système de contrôle d'accès (1),
dans lequel le dispositif de contrôle d'accès (3) est réalisé pour l'attribution à une zone physique à laquelle l'accès peut être accordé au moyen du dispositif de contrôle d'accès (3),
**caractérisé,**
**en ce que** le dispositif de contrôle d'accès (3) comprend une interface de programmation (8), dans lequel l'interface de programmation (8) sert à communiquer sans fil avec un dispositif mobile (2) et le dispositif de contrôle d'accès (3) reçoit, par l'intermédiaire de l'interface de programmation (8) au moins une, de préférence plusieurs, des données suivantes :
i. une version mise à jour d'un micrologiciel et/ou un micrologiciel supplémentaire
ii. une version mise à jour d'un identifiant de dispositif de contrôle d'accès,
iii. une version mise à jour d'au moins un attribut de préréglage, de préférence plusieurs attributs de préréglage,
iv. une version mise à jour de données, afin de pouvoir procéder au décryptage,
v. au moins un ordre de commande pour commander le dispositif de contrôle d'accès (3),
dans lequel le dispositif de contrôle d'accès (3) ouvre au moins partiellement l'interface de programmation (8) à la suite d'une communication avec le dispositif mobile (2).

2. Dispositif de contrôle d'accès (3) selon la revendication 1, **caractérisé en ce que** la communication est effectuée pour l'accord de l'accès à la zone physique.

3. Dispositif de contrôle d'accès (3) selon la revendication 1 ou 2, **caractérisé en ce que** le dispositif de contrôle d'accès (3) ouvre au moins partiellement l'interface de programmation (8) à la suite d'un résultat positif d'une vérification d'au moins une règle qui a lieu dans le dispositif de contrôle d'accès (3), dans lequel en particulier la vérification de la règle est effectuée pour l'accord de l'accès à la zone physique.

4. Dispositif de contrôle d'accès (3) selon la revendication 3, **caractérisé en ce que** la règle à vérifier dans le dispositif de contrôle d'accès (3) pour l'ouverture au moins partielle de l'interface de programmation (8) et/ou pour l'accord de l'accès correspond à l'une des les règles suivantes ou la comprend :
a. il convient de comparer une valeur de comparaison à une valeur de vérification,
b. il convient de vérifier si une heure actuelle se situe dans une plage horaire prédéfinie,
c. une authentification supplémentaire, en particulier au moyen d'un code ou d'une reconnaissance biométrique, doit être effectuée,
d. un marquage permettant d'identifier l'utilisateur en tant que gardien doit être vérifiée,
e. un résultat positif d'une règle à vérifier dans le dispositif mobile, doit être disponible,
dans lequel en particulier la règle b., c., d. et/ou e. ne s'applique que dans une fenêtre de temps prédéfinie.

5. Dispositif de contrôle d'accès (3) selon la revendication 3 ou 4, **caractérisé en ce que** le dispositif de contrôle d'accès (3) reçoit du dispositif mobile (2) des données pour l'au moins une règle et/ou l'au moins une règle, en particulier **en ce que** le dispositif de contrôle d'accès (3) utilise les données reçues pour l'au moins une règle et/ou l'au moins une règle reçue uniquement pour l'accord actuel de l'accès à la zone physique et/ou pour l'ouverture actuelle de l'interface de programmation.

6. Dispositif de contrôle d'accès (3) selon l'une des revendications précédentes, **caractérisé en ce que** le dispositif de contrôle d'accès (3) ouvre au moins partiellement l'interface de programmation (8) avant que le dispositif de contrôle d'accès (3) n'ait accordé l'accès à la zone physique.

7. Dispositif de contrôle d'accès (3) selon l'une des revendications précédentes, **caractérisé en ce que** différentes parties de l'interface de programmation (8) peuvent être ouvertes par le dispositif de contrôle d'accès (3), en particulier **en ce que** la partie de l'interface de programmation (8) qui est ouverte dépend d'un ordre reçu du dispositif mobile (2) ou de données pour un ordre, dans lequel l'ordre comprend la partie de l'interface de programmation (8) qui doit être ouverte.

8. Dispositif de contrôle d'accès (3) selon l'une des revendications précédentes, **caractérisé en ce que** le dispositif de contrôle d'accès (3) ferme l'interface de programmation (8) après un laps de temps prédéfini.

9. Dispositif de contrôle d'accès (3) selon l'une des revendications précédentes, **caractérisé en ce que** le dispositif de contrôle d'accès (3) envoie la sortie d'un procédé de contrôle d'accès pour l'accord de l'accès à la zone physique et/ou des caractéristiques du procédé de contrôle d'accès, en particulier des ordres de commande reçus par l'intermédiaire de l'interface de programmation, au dispositif mobile (2) après qu'un ordre de requête pour l'envoi de la sortie du procédé de contrôle d'accès et/ou des caractéristiques du procédé de contrôle d'accès du dispositif mobile a été reçue par le dispositif de contrôle d'accès, dans lequel en particulier un utilisateur initie volontairement l'ordre de requête.

10. Système de contrôle d'accès (1) comportant un dispositif de contrôle d'accès (3) selon l'une des revendications précédentes 1 à 9 et comportant un dispositif mobile (2) réalisé pour une communication sans fil avec le dispositif de contrôle d'accès (3) par l'intermédiaire de l'interface de programmation (8).

11. Système de contrôle d'accès (1) selon la revendication 10, **caractérisé en ce que** le dispositif mobile (2) comprend une information d'accès (10), dans lequel l'information d'accès (10) comprend une portion cryptée (11) qui ne peut pas être décryptée par le dispositif mobile (2), dans lequel en particulier la portion cryptée (11) comprend un attribut d'accès (13, 14, 15) à transmettre, en particulier une règle (14) à vérifier ou des données pour une règle (14) à vérifier.

12. Système de contrôle d'accès (1) selon la revendication 10 ou 11, **caractérisé en ce que** le dispositif mobile (2) vérifie une règle pour l'accord de d'accès à la zone physique, et le dispositif de contrôle d'accès (3) reçoit le résultat de la vérification par l'intermédiaire de l'interface de programmation (8).

13. Procédé (100, 200, 300) permettant de transmettre des données d'un dispositif mobile (2) à un dispositif de contrôle d'accès (3), en particulier selon l'une des revendications 1 à 9,
dans lequel le dispositif de contrôle d'accès (3) est réalisé pour l'attribution à une zone physique à laquelle l'accès peut être accordé au moyen du dispositif de contrôle d'accès (3), dans lequel le dispositif de contrôle d'accès (3) comprend une interface de programmation (8),
**caractérisé en ce que**
que le dispositif de contrôle d'accès (3) utilise l'interface de programmation (8) pour recevoir sans fil des données du dispositif mobile (2) et le dispositif de contrôle d'accès (3) reçoit par l'intermédiaire de l'interface de programmation (8) au moins une, de préférence plusieurs, des données suivantes :
i. une version mise à jour d'un micrologiciel et/ou un micrologiciel supplémentaire
ii. une version mise à jour d'un identifiant de dispositif de contrôle d'accès,
iii. une version mise à jour d'au moins un attribut de préréglage, de préférence plusieurs attributs de préréglage,
iv. une version mise à jour de données, afin de pouvoir procéder au décryptage,
v. au moins un ordre de commande pour commander le dispositif de contrôle d'accès (3),
dans lequel le dispositif de contrôle d'accès (3) ouvre au moins partiellement l'interface de programmation (8) à la suite d'une communication avec le dispositif mobile (2).
